# EUROPEAN PATENT SPECIFICATION

(11) **EP 2 800 070 B1**
(45) Date of publication and mention of the grant of the patent: **11.11.2020**
(21) Application number: 12863141.3
(22) Date of filing: 21.12.2012
(51) Int. Cl.: G07D 13/00, G07D 11/24, G07D 11/32, G07G 1/12, G06Q 20/20

(54) **MONEY SETTLEMENT DEVICE AND MONEY TRANSACTION SYSTEM**
GELDABRECHNUNGSVORRICHTUNG UND GELDTRANSAKTIONSSYSTEM
DISPOSITIF DE RÈGLEMENT EN ARGENT ET SYSTÈME DE TRANSACTION EN ARGENT

(30) Priority: 26.12.2011 JP 2011283555; 26.12.2011 JP 2011283573
(43) Date of publication of application: 05.11.2014
(73) Proprietor: Glory Ltd., Himeji-shi, Hyogo 670-8567 (JP)
(72) Inventor: DOI, Kazuhiro, Himeji-shi Hyogo-ken (JP); TAGASHIRA, Kenichi, Himeji-shi Hyogo-ken (JP); HIGASHIYAMA, Minoru, Himeji-shi Hyogo-ken (JP); NAKAGAWA, Keiju, Himeji-shi Hyogo-ken (JP)
(74) Representative: SSM Sandmair
(86) International application number: PCT/JP2012/083237
(87) International publication number: WO 2013/099795

(56) References cited:
- EP-A1- 1 418 549
- EP-A1- 1 962 249
- WO-A1-2008/149433
- WO-A1-2010/032337
- WO-A1-2011/121736
- WO-A1-2011/121736
- JP-A- H0 486 994
- JP-A- 2009 295 132
- US-A1- 2011 206 265

## Description

### FIELD OF THE INVENTION

The present invention relates to a money settlement apparatus and a money transaction system for performing a settlement process when a price of merchandise is paid, and a depositing and dispensing process in an account transaction using deposit money in a bank account.

### BACKGROUND ART

Cash handlers such as banking establishments are sometimes imposed to check authenticity and fitness of money, and to report, to a central bank, information about authenticity and fitness of recirculated money.

For example, "DECISION OF THE EUROPEAN CENTRAL BANK of 16 September 2010 on the authenticity and fitness checking and recirculation of euro banknotes (ECB/2010/14) (2010/597/EU)" (hereinafter referred to also as "ECB decision") specifies regulations and procedures of the authenticity and fitness checking and recirculation of euro banknotes.

In recent years, a POS (Point Of Sale) register or change machine, which is used in a store where merchandise is sold, can not only perform a mere settlement process in which a merchandise price is deposited and a change is dispensed, but can also perform an account transaction in which a price is directly debited from a bank account of a customer, or money is withdrawn from the bank account. Like the banking establishments, a store, which has such a POS register or change machine capable of performing the account transaction, may be imposed to report information about the authenticity and fitness of recirculated money, under a regulation like the above ECB decision.

### DISCLOSURE OF THE INVENTION

### PROBLEM OF THE INVENTION

However, the conventional POS register or change machine cannot deal with the aforementioned report obligation. In this case, a great amount of the time and the labor of staffs may be needed to create such a report.

For example, an apparatus disclosed in JP10-198866A (Patent Document 1) is configured to store number-of-money information of each denomination in a change machine, and to output cash amount data or sales data of merchandise. However, the report disclosed in Patent Document 1 is not in conformity with the regulations of ECB decision or the like, and its content differs from that imposed by the regulations of the ECB decision or the like.

In addition, an apparatus disclosed in JP2003-223680A (Patent Document 2) is also configured to output a report of sales proceeds and the number of money in a change machine. However, similarly to Patent Document 1, the report disclosed in Patent Document 2 is not in conformity with the regulations of ECB decision or the like, and its content differs from that imposed by the regulations of the ECB decision or the like.

The report content imposed by the regulations of the ECB decision or the like is not always information necessary to the store. There is sometimes no merit in creating such a report for the store.

Although the conventional POS register or change machine has a function for recognizing the fitness of money, it is difficult to differentiate the manner of handling fit notes and unfit notes, between the settlement process and the account transaction. For example, suppose that only fit notes have to be dispensed both in the settlement process in which both fit notes and unfit notes can be dispensed and in the account transaction in which only fit notes can be dispensed. Namely, an unfit note is not reused but only a fit note is always dispensed as reused money. In this case, even in the settlement process in which both fit notes and unfit notes are allowed to be dispensed by the regulations, a money settlement apparatus does not use unfit notes but dispenses fit notes only. Thus, fit notes that can be dispensed decreases, and efficient money circulation is hampered.

On the other hand, in order that both fit notes and unfit notes can be dispensed in the settlement process and that only fit notes are dispensed in the account transaction, fit notes and unfit notes have to be stored in discrete storing units (reuse stackers). In this case, the reuse stackers should independently store fit banknotes and unfit banknotes by denomination. Thus, the number of reuse stackers increases, which affects the size of the change machine.

Patent Document 1 discloses the apparatus capable of displaying the number of money of each denomination stored in the change machine, on a screen of a POS terminal. However, the apparatus of Patent Document 1 cannot solve the above problem.

International patent application number WO2011/121736 describes a currency distribution system comprising a store management device disposed in a store and a distribution terminal device disposed in a cash distribution company that is connected to the store management device for communications regarding the delivery and collection of currency.
US patent application number 2011/206265 describes a paper sheet management device wherein a serial number recognition unit recognizes the serial number of banknotes processed in a transaction.

European patent application number EP1962249 describes an apparatus for separating and feeding banknotes which includes a means for discriminating between the denominations of the banknotes and their fitness.

European patent application number EP1418549 describes an automatic teller machine which is capable of executing high-speed transactions and which verifies the authenticity of bank notes.

The present invention has been made in view of the above circumstances. The object of the present invention is to provide a money settlement apparatus and a money transaction system, which can easily output, in a store that sells merchandise, the information which must be reported to a central bank, and can also output information useful to the store.

In addition, the object of the present invention is to provide a merchandise data processing apparatus and a money transaction system which can efficiently use money based on information about the fitness or unfitness of money, without resorting to a large-sized change machine.

### SUMMARY OF THE INVENTION

A money settlement apparatus according to the present invention is a money settlement apparatus as defined in claim 1.

The output unit outputs the transaction information in such a manner that the settlement process and the account transaction are differentiated from each other.

The transaction information includes information about a denomination and the fitness of the money that is recirculated in a market by a dispensing operation.

The transaction report may include master data having information about a manufacturer of the money settlement apparatus, information about a type of the money settlement apparatus, and information about a store in which the money settlement apparatus is installed.

The transaction report may include operation data having information about an amount of money settled in the settlement process by the money settlement apparatus, and information about an amount of money recirculated by the dispensing operation of the account transaction, in such a manner that a fit note and an unfit note are differentiated from each other for each denomination.

The transaction information includes number-of-money information by denomination stored in the money settlement apparatus, and the output unit outputs the transaction information including the number-of-money information as a store report.

A money transaction system according to the present invention is a money transaction system as defined in claim 7, said system including: a money settlement apparatus according to claim 1 and further comprising a transaction-data processing apparatus communicably connected to the money settlement apparatus and configured to process merchandise transaction data; wherein the transaction-data processing apparatus includes: a memory unit configured to store transaction data of merchandise sold in the settlement process; and a communication unit communicably connected to the money settlement apparatus.

The output unit outputs the transaction information in such a manner that the settlement process and the account transaction are differentiated from each other.

The transaction information includes information about a denomination and the fitness of the money that is recirculated by the money settlement apparatus in a market by a dispensing operation.

The transaction information includes number-of-money information by denomination stored in the money settlement apparatus, and the output unit outputs the transaction information including the number-of-money information as a store report.

In addition, the transaction-data processing apparatus includes a communication unit communicably connected to the money settlement apparatus configured to deposit and dispense money in a settlement process in which a merchandise price is paid and in an account transaction based on a bank account, and a display unit configured to display the number of money in the money settlement apparatus differently between when the settlement process is performed and when the account transaction is performed.

When the settlement process is performed, the display unit may be configured to display total-number-of-money information showing the total number of fit note(s) and unfit note(s) stored in the money settlement apparatus. When the account transaction is performed, the display unit may be configured to display number-of-fit-notes information showing the number of fit notes stored in the money settlement apparatus.

The display unit may be configured such that, when the total-number-of-money information or the number-of-fit-notes information is not more than a preset value, the display unit displays number-of-money information.

The display unit may be configured such that, when the total-number-of-money information or the number-of-fit-notes information is not less than a dispensable upper limit value in one transaction, the display unit displays the dispensable upper limit value.

The display unit may be configured such that, when the number-of-fit-notes information informs that money of a certain denomination to be dispensed is insufficient during the account transaction, the display unit displays a guidance by which an alternative dispensing operation, in which money of a denomination lower than the certain denomination is dispensed, can be selected.

A money transaction system according to another embodiment of the present invention is a money transaction system including: a transaction-data processing apparatus configured to perform a settlement apparatus in which a merchandise prices is paid and an account transaction based on a bank account; and a money settlement apparatus as defined in claim 1 and configured to perform a money depositing and dispensing operation in the settlement process and in the account transaction.

The money settlement apparatus includes: a depositing unit into which money is put, a dispensing unit configured to dispense money; a storage configured to store money; a transport unit configured to transport money from the depositing unit to the storage or to transport money from the storage to the dispensing unit; a recognition unit configured to recognize a denomination and a fitness or an unfitness of money being transported by the transport unit; and a communication unit communicably connected to the transaction-data processing apparatus. The transaction-data processing apparatus includes a communication unit communicably connected to the money settlement apparatus, and a display unit configured to display number of money in the money settlement apparatus differently between when the settlement process is performed and when the account transaction is performed.

When the settlement process is performed, the display unit may be configured to display total-number-of-money information showing the total number of fit notes and unfit notes stored in the money settlement apparatus. When the account transaction is performed, the display unit may be configured to display number-of-fit-notes information showing the number of fit notes stored in the money settlement apparatus.

The money settlement apparatus further includes a memory unit storing an order of fit notes and unfit notes stored in the money settlement apparatus. When the account transaction is performed, the money settlement apparatus may be configured to dispense fit notes from the storage, based on the order of fit notes stored in the memory unit.

The display unit may be configured such that, when the total-number-of-money information or the number-of-fit-notes information is not less than a dispensable upper limit value in one transaction, the display unit displays the dispensable upper limit value.

The money settlement apparatus may be configured to store money by denomination in such a manner that a fit note and an unfit note are separated from each other. When the settlement process is performed, the display unit may be configured to display the total number of money including the number of money stored in a storage for storing fit notes and the number of money stored in a storage for storing unfit notes. When the account transaction is performed, the display unit may be configured to display the number of money stored in the storage for storing fit notes.

The money settlement apparatus may be configured to store money by denomination in such a manner that fit notes and unfit notes are stored in a mixed state.

The money settlement apparatus may include a tape-reeling type storage which sandwiches banknotes, one by one, between a plurality of tapes and reels up the tapes together with the banknotes.

The display unit may be configured such that, when the number-of-fit-notes information informs that money of a certain denomination to be dispensed is insufficient during the account transaction, the display unit displays a guidance by which an alternative dispensing operation, in which money of a denomination lower than the certain denomination is dispensed, can be selected.

The money settlement apparatus and the money transaction system according to the present invention can easily output, in a store that sells merchandise, the information which must be reported to a central bank, and can also output information useful to the store.

In addition, the money settlement apparatus and the money transaction system according to the present invention can efficiently use money based on information about the fitness or unfitness of the money, without resorting to a large-sized change machine.

### BRIEF DESCRIPTION OF THE DRAWINGS

Fig. 1 is a block diagram showing a structure of a money transaction system 2 and a system in bank 3 according to an embodiment related to the present invention.
Fig. 2 is a view showing an appearance of an example of each money settlement apparatus 11.
Fig. 3 is a block diagram showing an structural example of the money settlement apparatus 11.
Fig. 4 is a perspective view showing an appearance of a POS register 15 according to this embodiment.
Fig. 5 is a block diagram showing a structure of the POS register 15.
Fig. 6 is a flowchart showing an operation of the money transaction system 2 in this embodiment.
Fig. 7 is a flowchart showing an operation of the money transaction system 2 in this embodiment.
Fig. 8 is a table showing log information of a settlement process or an account transaction.
Fig. 9 is a table showing tabulated data of the log information of the settlement process and the account transaction, in such a manner that the number of fit banknotes of each denomination and the number of unfit banknotes of each denomination are separated from each other.
Fig. 10 is a display example of a transaction report which is created based on the tabulated data shown in Fig. 9.
Fig. 11 is another display example of the transaction report which is created based on the tabulated data shown in Fig. 9.
Fig 12 is a display example of store report.
Fig. 13 is a flowchart showing an operation of the money transaction system 2 according to this embodiment.
Fig. 14 is a view showing a screen of a display unit 34 in the settlement apparatus.
Fig. 15 is a flowchart showing an operation of the money transaction system 2 according to this embodiment.
Fig. 16 is a view showing a screen of the display unit 34 in the account transaction.
Fig. 17 is an example of a screen displayed on the display unit 34 of the POS register 15, when fit banknotes are insufficient in the account transaction.
Fig. 18 is another display example of the number of banknotes in a number-of-banknotes display area R4.
Fig. 19 is a flowchart showing an account transaction operation of the money transaction system 2 according to a second not claimed embodiment related to the present invention.
Fig. 20 is a view showing a screen displayed on the display unit 34 of the POS register 15 in the account transaction according to a third not claimed embodiment related to the present invention.

### BEST MODE FOR CARRYING OUT OF THE INVENTION

Embodiments according to the present invention will be described herebelow with reference to the drawings. These embodiments do not limit the present invention.

### (First Embodiment)

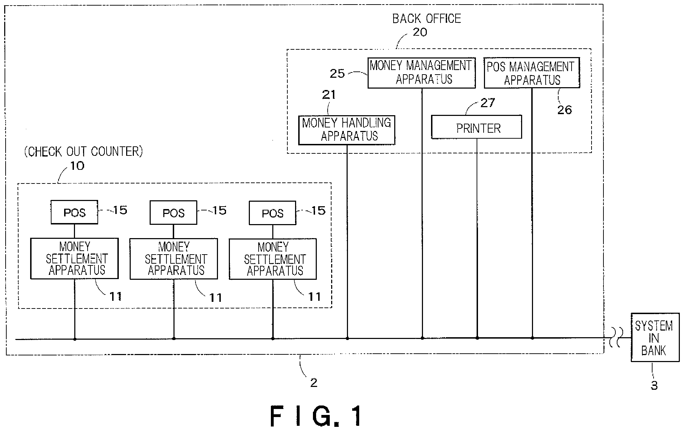

Fig. 1 is a block diagram showing a structure of a money transaction system 2 and a system in bank 3 according to an embodiment related to the present invention. The money transaction system 2 is a system configured to handle and manage money, which is used when a merchandise price is paid, and merchandise data. The system in bank 3 is a system configured to manage a deposit account of a customer, and to handle an operation in which money is deposited to the account and an operation in which money is dispensed from the account.

The money transaction system 2 is installed in a checkout area in a store. The money transaction system 2 includes a checkout counter 10 configured to deposit money received by a staff from a customer and to dispense money to be handed to a customer, and a back office 20 configured to manage money in the checkout counter 10 and merchandise.

The checkout counter 10 is provided with three pairs of money settlement apparatuses 11 and POS registers 15. The money settlement apparatus 11 is capable of depositing and dispensing money to perform a settlement process for purchasing a piece of merchandise with respect to a customer, and is capable of performing an account transaction using deposit money in a bank account, based on an instruction of the POS register 15. The POS register 15 is configured to handle and manage merchandise sales data and data of a customer who purchased merchandise, and is used as an operation unit for the account transaction using deposit money in the bank account. Although Fig. 1 shows the three pairs of the money settlement apparatuses 11 and the POS registers 15, the number of them is not limited.

The money settlement apparatus 11 and the POS register 15 are operated by a staff or a customer himself/herself, so as to be used for the settlement process and the account transaction between the staff and the customer. For example, the money settlement apparatus 11 deposits money paid by a customer and dispenses money to be paid to the customer. The POS register 15 handles merchandise sales data, account transaction data and purchaser's data, and stores the data.

The money settlement apparatus 11 is communicably connected, for example, to the POS register 15 operated by a staff or to a self checkout register (not shown) operated by a customer. The money settlement apparatus 11 may be integrally formed with the POS register (or the self checkout register) 15.

In the back office 20, there are provided a money handling apparatus 21, a money management apparatus 25, a POS management apparatus 26 and a printer 27. The checkout counter 10 and the back office 20 are communicably connected to each other through a LAN (Local Area Network). The money handling apparatus 21 is communicably connected to the money settlement apparatus 11. For example, the money handling apparatus 21 is configured to dispense change funds to be loaded into the money settlement apparatus 11, and to deposit sales proceeds having been collected from the money settlement apparatus 11. The money management apparatus 25 is communicably connected to the money settlement apparatus 11 and the money handling apparatus 21, and is configured to manage money stored in the money settlement apparatuses 11 and the money handling apparatus 21. For example, the money management apparatus 25 manages money settled in each money settlement apparatus 11 and money transported between the money settlement apparatuses 11 and the money handling apparatus 21. The POS management apparatus 26 is communicably connected to the POS registers 15, and is configured to manage a merchandise flow. The printer 27 is configured to print various data transmitted from the money settlement apparatuses 11, the POS registers 15, the money handling apparatus 21, the money management apparatus 25 and the POS management apparatus 26.

The money transaction system 2 is communicably connected to the system in bank 3 through an internet or a telephone line. Thus, in response to a request of a customer, the money transaction system 2 is capable of debiting a merchandise price from deposit money in a bank account of the customer, or is capable of withdrawing a cash from the deposit money in the bank account.

### [Structure of Money Settlement Apparatus 11]

Each money settlement apparatus 11 includes a banknote depositing/dispensing apparatus 12 configured to perform a settlement process by depositing and dispensing banknotes, and a coin depositing/dispensing apparatus 13 configured to perform a settlement process by depositing and dispensing coins.

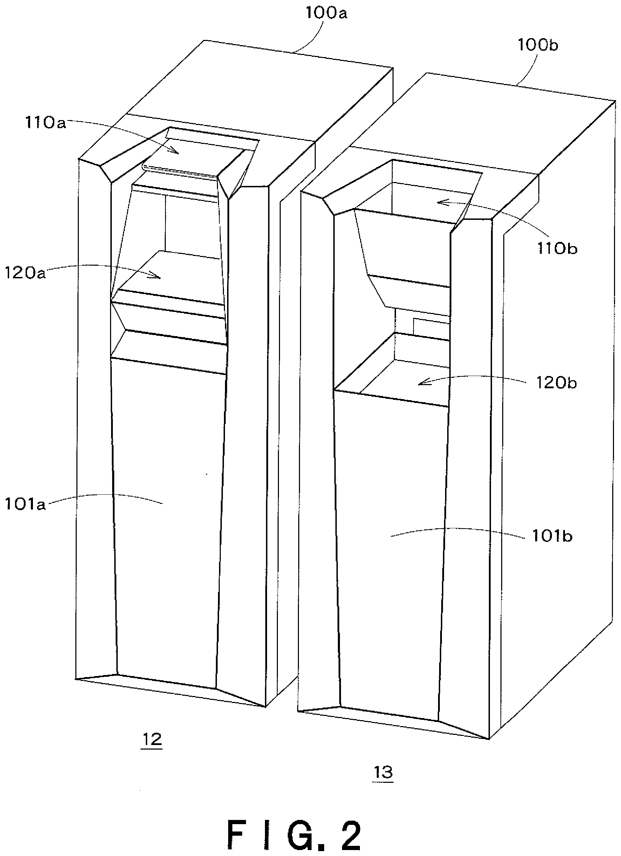

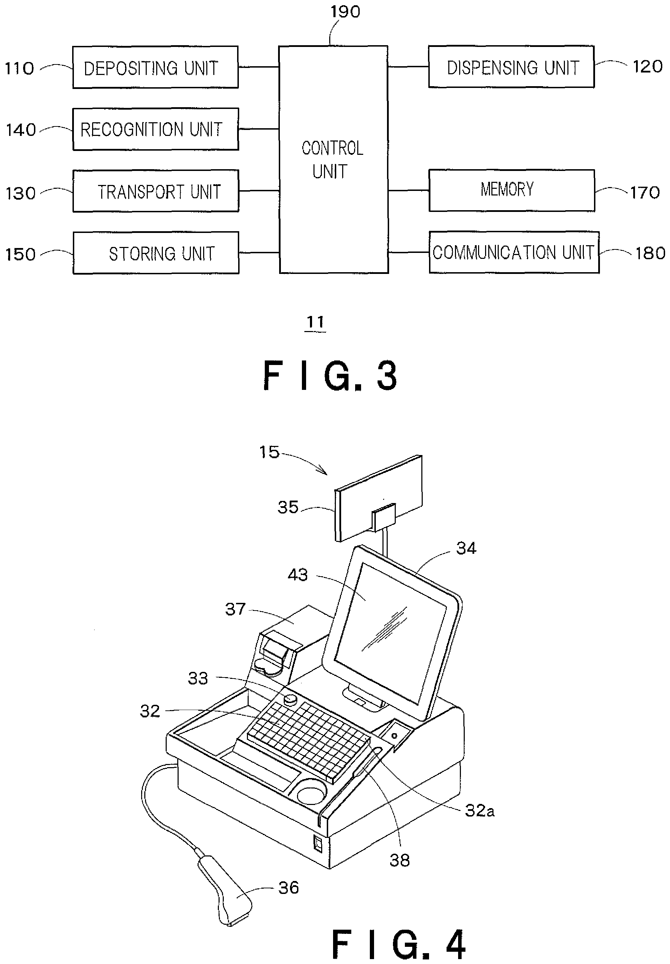

In order to differentiate constituent elements of the banknote depositing/dispensing apparatus 12 and constituent elements of the coin depositing/dispensing apparatus 13 from each other, in Fig. 2, the character "a" is added to each constituent element of the banknote depositing/dispensing apparatus 12 and the character "b" is added to each constituent element of the coin depositing/dispensing apparatus 13. Since the coin depositing/dispensing apparatus 13 and the banknote depositing/dispensing apparatus 12 handle different objects, i.e., coins and banknotes, the coin depositing/dispensing apparatus 13 and the banknote depositing/dispensing apparatus 12 have different structures. However, they have basically the same block structure shown in Fig. 3.

Fig. 2 is a view showing an appearance of an example of each money settlement apparatus 11. The money settlement apparatus 11 includes the banknote depositing/dispensing apparatus 12 and the coin depositing/dispensing apparatus 13. The banknote depositing/dispensing apparatus 12 has a housing 100a, a depositing unit 110a and a dispensing unit 120a. The depositing unit 110a is disposed to put thereinto a banknote given by a customer. The dispensing unit 120a is disposed to dispense a change banknote.

The coin depositing/dispensing apparatus 13 includes a housing 100b, a depositing unit 110b and a dispensing unit 120b. The depositing unit 110b is disposed to put thereinto a coin given by a customer. The dispensing unit 120b is disposed to dispense a change coin.

Fig. 3 is a block diagram showing a structural example of the money settlement apparatus 11. The money settlement apparatus 11 further includes, in addition to the depositing unit 110 and the dispensing unit 120, a transport unit 130, a recognition unit 140, a storing unit 150, a memory 170, a communication unit 180 as an output unit, and a control unit 190.

The transport unit 130 is configured to transport money having been put into the depositing unit 110 to the storing unit 150, or is configured to transport from the storing unit 150 money to be dispensed from the dispensing unit 120.

The recognition unit 140 is configured to detect a denomination, an authenticity, a fitness, a version, the number and so on of money being transported by the transport unit 130. For example, the recognition unit 140 is equipped with a sensor such as an image sensor or a magnetic sensor.

The storing unit 150 is configured to store, by denomination, money having been recognized by the recognition unit 140. When banknotes are stored, the storing unit 150 may be a stacking-type storing unit which stacks banknotes by denomination, or a tape reeling type which reels up a plurality of tapes between which banknotes are sandwiched by denomination.

The storing unit 150 stores banknotes by denomination in a reusable manner, in such a manner that fit banknotes and unfit banknotes are separated from each other. For example, the storing unit 150 may store, by denomination, fit banknotes and unfit banknotes in discrete storages. Alternatively, when fit banknotes and unfit banknotes are stored in a mixed state, the memory 170 stores an order of fit banknotes and unfit banknotes stored in the storing unit 150. When the storing unit 150 is a stacking-type storing unit, the memory 170 stores a stacking order of fit banknotes and unfit banknotes. When the storing unit 150 is a tape-reeling type storing unit, the memory 170 stores a reeling order of fit banknotes and unfit banknotes. Thus, the storing unit 150 can store banknotes by denomination in such a manner that fit banknotes and unfit banknotes are separated from each other.

A fit banknote is a banknote in a good condition having few stains, spots, scrabbles, color fade-out, cleavages, cutouts, holes, wrinkles and so on. An unfit banknote is a banknote that is not in a good condition having at least any one of stains, spots, scrabbles, color fade-out, cleavages, cutouts, holes, wrinkles and so on. The fitness distinction is defined in the ECB decision. The fitness is mechanically recognized by the recognition unit 140, or is judged by an expert staff. Thus, the fitness distinction may differ depending on a type (kind of the recognition unit 140) of the money settlement apparatus 11.

The memory 170 includes a ROM (Read Only Memory) or a HDD (Hard Disk Drive) storing various programs and data for controlling the money settlement apparatus 11, and a RAM (Random Access Memory) serving as a program loading area and a work area used when a program is executed. The memory 170 stores, by denomination, the number of money stored in the storing unit 150. In addition, the memory 170 stores, by denomination, the number of money that is deposited, dispensed and recognized by the recognition unit 140.

The communication unit 180 as an output unit is communicably connected to the other apparatuses (money handling apparatus 21, the money management apparatus 25, the POS management apparatus 26, the printer 27) which constitute the money transaction system 2. For example, the communication unit 180 can transmit number-of-money data of money stored in the storing unit 150 and money data used in a depositing/dispensing operation, to the POS register 15, the money handling apparatus 21, the money management apparatus 25 and the printer 27.

The control unit 190 is a central processing unit (CPU) configured to execute programs in the memory 170 so as to control the money settlement apparatus 11 as a whole.

### [Structure of POS Register 15]

Fig. 4 is a perspective view showing an appearance of the POS register 15 according to this embodiment. The POS register 15 as a transaction-data processing apparatus includes a keyboard 32, a mode key 33, a display device for operator 34, a display device for customer 35, a code scanner 36, a printer 37, a card reader 38 and so on. A touch panel 43 as an input apparatus is laminated on the display device for operator 34.

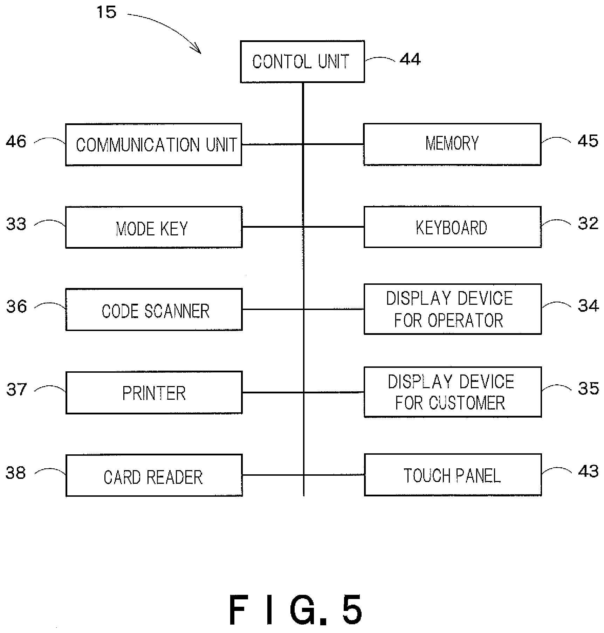

Fig. 5 is a block diagram showing a structure of the POS register 15. The POS register 15 further includes a control unit 44, a memory 45 and a communication unit 46.

The memory 45 includes a ROM or a HDD storing various programs and data for controlling the POS register 15, a RAM serving as a program loading area and a work area used when a program is executed. The memory 45 stores, in addition to the various programs, a merchandise file, sales data, customer data and so on. The merchandise file is a file in which a merchandise name, a unit price, etc. are stored in relation to a merchandise code. The sales data are data related to a name, the number, a price, etc. of merchandise having been sold. The customer data are data related to an age, a sex, etc. of a customer who purchased merchandise.

The communication unit 46 is communicably connected to the other apparatuses (money settlement apparatuses 11, the POS management apparatus 26, the printer 27 and the system in bank 3) which constitute the money transaction system 2.

The control unit 44 is a central processing unit (CPU) configured to execute the programs in the memory 45 so as to control the POS register 15 as a whole. For example, by controlling the communication unit 46, the control unit 44 can transmit the merchandise file, the sales data and the customer data, to the money settlement apparatuses 11, the POS management apparatus 26 and the printer 27.

The keyboard 32 is configured to input, to the control unit 44, a signal corresponding to a key that has been operated. The mode key 33 is configured to switch an operation mode of the POS register 15 to one of operation modes such as a registration mode, a setting mode, a settlement process mode, an account transaction mode and a checking mode. The display device for operator 34 and the display device for customer 35 are configured to display data stored in the memory 45 or data having been inputted to the keyboard 32 or the mode key 33 and the touch panel 43.

The code scanner 36 is configured to optically scan a merchandise code, such as a bar code, attached to merchandise. The display device for operator 34 and the display device for customer 35 are configured to display data stored in the memory 45 or data having been inputted to the keyboard 32 or the mode key 33 and the touch panel 43. The code scanner 36 is configured to optically scan a merchandise code, such as a bar code, attached to merchandise. The printer 37 is configured to print, on a receipt, data stored in the memory 45 or data having been inputted to the keyboard 32 or the mode key 33 and the touch panel 43. The card reader 38 is configured to scan a bank ATM card when a bank account transaction is performed.

The operator display unit 34 is configured to display contents of a journal printed on a receipt, numeric keys, mode keys and the number of money in the money settlement apparatuses 11. A staff may input a figure and a mode though the keyboard 32 and the mode keys 33, but also may input a figure and a mode by operating the touch panel 43 laminated on the operator display unit 34. The customer display unit 35 is configured to display, to a customer, contents of a journal among the screens that are displayed on the operator display unit 34.

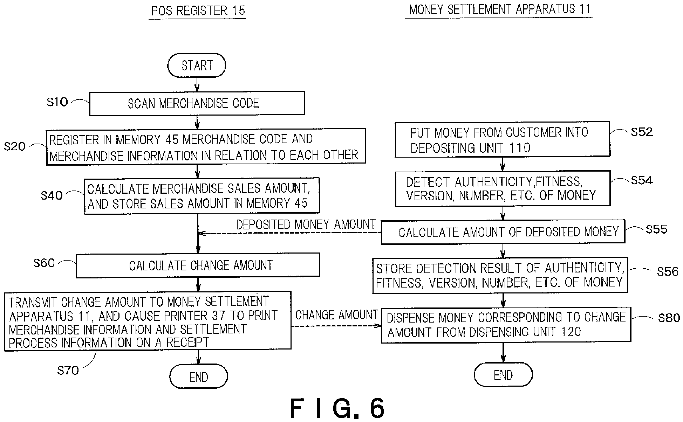

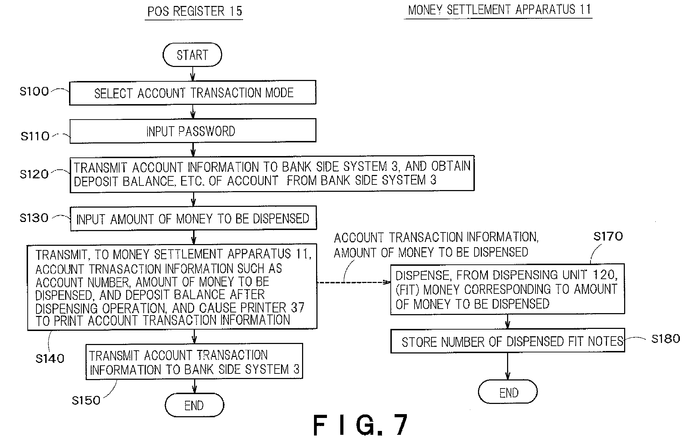

Figs. 6 and 7 are flowcharts showing operations of the money transaction system 2 according to this embodiment. The money transaction system 2 according to this embodiment can perform a settlement process in which a merchandise price is paid by money, and an account transaction in which a merchandise price is paid by using deposit money in a bank account or money is withdrawn from the deposit money in the bank account. The account transaction in which money is withdrawn from the deposit money in the bank account is a transaction (ATM-like dispensing operation) similar to a money withdrawal operation using an ATM (automated teller machine) in a bank or the like. It goes without saying that the money transaction system 2 can deal with a credit payment using a credit card. However, since a credit payment, which does not use money, is not directly related to this embodiment, description thereof is omitted.

### [Settlement Process: Fig. 6]

When a customer purchases merchandise, the POS register 15 performs a merchandise sales registration process. In the sales registration process, for example, the code scanner 36 scans a merchandise code attached to the merchandise (S10), and the control unit 44 retrieves the merchandise file based on the merchandise code, and reads out merchandise information, such as a merchandise name and a unit price thereof, corresponding to the merchandise code. Then, the control unit 44 registers, in the memory 45, the merchandise code and the merchandise information in relation to each other (S20). After the sales registration for all the merchandise to be purchased by the customer have been completed, a staff presses down a sub-total key.

When the staff has pressed down the sub-total key, the control unit 44 calculates a sales amount of the merchandise, and registers the sales amount in the memory 45 (S40).

When the customer pays in cash, the staff operates the keyboard 32 to perform the settlement process. In the settlement process, the staff puts money, which has been handed from the customer, into the depositing unit 110 (S52). The money having been put into the money settlement apparatus 11 is transported to the storing unit 150 by the transport unit 130. The recognition unit 140 detects an authenticity, a fitness, a version, the number and so on of the money being transported (S54), and calculates an amount of the deposited money (S55). The memory 170 stores, in addition to the deposited money amount, the detection result such as the authenticity, the fitness, the version and the number of the deposited money (S56). Namely, at this time, the memory 170 stores the deposited money by denomination in such a manner that at least a fit banknote and an unfit banknote are separated from each other.

The control unit 44 deducts the sales amount stored in the memory 45 from the deposited money amount so as to calculate a change amount (S60). The POS register 15 transmits the change amount to the money settlement apparatus 11, and causes the printer 37 to print the merchandise information and the settlement process information on a receipt (S70).

The money settlement apparatus 11 dispenses, from the dispensing unit 120, money corresponding to the change amount having been transmitted from the POS register 15 (S80). The staff passes the change, the receipt and the merchandise to the customer, and the settlement process is finished.

Although there is a regulation like the aforementioned ECB decision, a fit banknote and an unfit banknote may be dispensed as a change in the normal money-based settlement process performed in a store which is different from a business handled by cash handlers such as banking establishments. Thus, in the normal money-based settlement process, the money settlement apparatus 11 can dispense, as a change, a fit banknote and an unfit banknote with no distinction. Note that, at this time, the memory 170 stores the numbers of fit banknotes and unfit banknotes that have been dispensed.

### [Account Transaction (ATM-like Dispensing Operation): Fig. 7]

When a customer withdraws money from the money transaction system 2, by using deposit money in a bank account, a staff operates the mode key 33 of the POS register 15 to select the account transaction mode (S100). The customer hands a bank ATM card to the staff, the staff passes the card through the card reader 38. The customer inputs a password by operating a key pad (not shown) (S110).

The POS register 15 transmits account information to the system in bank 3, and obtains a deposit balance of the account and so on from the system in bank 3 (S120). The POS register 15 permits money to be dispensed within the limit of the deposit balance. The staff or the customer operates the keyboard 32 or the like to input an amount of money to be dispensed, which is desired by the customer (S130). At this time, an amount of money to be dispensed should be not more than the deposit balance of the account.

When the amount of money to be dispensed, which is not more than the deposit balance, is inputted, the POS register 15 transmits, to the cash settlement apparatus 11, an account number, the amount of money to be dispensed, account transaction information such as a deposit balance after the dispensing operation, and causes the printer 37 to print the account transaction information on a receipt (S140). Further, the POS register 15 transmits, to the system in bank 3, the account number, the amount of money to be dispensed, account transaction information such as a deposit balance after the dispensing operation (S150). The system in bank 3 updates a deposit balance of the account of the customer.

The money settlement apparatus 11 dispenses, from the dispensing unit 120, money corresponding to the amount of money to be dispensed that has been transmitted from the POS register 15 (S170). At this time, the money transaction system 2 performs the ATM-like dispensing operation in the same manner as the cash handlers. Thus, when there is a regulation like the ECB decision, the money transaction system 2 must dispense only fit banknotes and is forbidden to dispense unfit banknotes, similarly to the financial affairs performed by the cash handlers. Therefore, the cash settlement apparatus 11 dispenses only fit banknotes. For example, when fit banknotes and unfit banknotes are stored in discrete storages of the storing unit 150, the money settlement apparatus 11 feeds out money from the storage for fit banknotes, and sends the money to the dispensing unit 120. When fit banknotes and unfit banknotes are stored in the storing unit 150 in a mixed manner, only fit banknotes are sent to the dispensing unit 120, based on the order of fit banknotes and the unfit banknotes stored in the memory 170. The memory 170 stores the number of the dispensed fit banknotes (S180).

When the staff hands the money and the receipt to the customer, the account transaction is finished.

The account transaction may include a direct debit of a merchandise price. Namely, a customer can pay the merchandise price by using deposit money in his/her bank account, and can withdraw money from the bank account by the ATM-like dispensing operation. For example, when the customer pays 20 euro as a merchandise price and withdraws 80 euro from the bank account (ATM-like dispensing operation), the money transaction system 2 withdraws 100 euro from the bank account. 20 euro out of 100 euro is taken as the merchandise price and the remaining 80 euro is dispensed to the customer.

### [Creation of Transaction Report and Store Report]

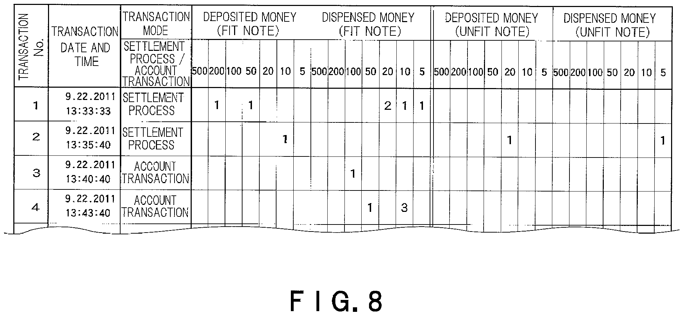

Fig. 8 is a table showing log information of the settlement process or the account transaction. When the settlement process and the account transaction are repeated, log information of the settlement process and the account transaction, which is shown in Fig. 8, is stored in the memory 170. The log information is information showing the number of fit banknotes of each denomination and unfit banknotes of each denomination, which have been deposited and dispensed in the respective settlement processes and the account transactions. The log information includes a transaction date and time of the respective settlement processes and the account transactions.

For example, the transaction number 1 is a log of a settlement process. In this settlement process, the money settlement apparatus 11 deposits one 200-euro fit banknote, and one 50-euro fit banknote. In addition, the money settlement apparatus 11 dispenses two 20-euro fit banknotes, one 10-euro fit banknote and one 5-euro fit banknote. This means that the money settlement apparatus 11 receives from a customer the banknotes of 250 euro in total as a price, and dispenses banknotes of 35 euro in total as a change to the customer.

The transaction number 2 is also a log of a settlement process. In this settlement process, the money settlement apparatus deposits one 10-euro fit banknote and one 20-euro unfit banknote. In addition, the money settlement apparatus 11 dispenses one 5-euro unfit banknote. Namely, the money settlement apparatus 11 receives 30 euro from a customer purchasing merchandise, and dispenses 5 euro as a change. In this settlement process, the money settlement apparatus 11 dispenses the 5-euro unfit banknote. However, in the normal settlement process, it is allowed that an unfit banknote is dispensed.

The transaction number 3 is a log of an account transaction. In this account transaction, the money transaction system 2 withdraws 100 euro from a bank account of a customer, and the cash settlement apparatus 11 dispenses one 100-euro fit banknote.

When a customer withdraws 100 euro from a bank account and purchases a 20-euro merchandise simultaneously therewith, as shown in the transaction number 4, the banknote settlement apparatus 11 takes 20 euro as a merchandise price out of 100 euro and dispenses the remaining 80 euro. At this time, the money settlement apparatus 11 dispenses one 50-euro fit banknote and three 10-euro fit banknotes.

According to the ECB regulation, in the above account transaction, it is forbidden to dispense an unfit banknote. Thus, in the account transaction, money to be dispensed must be all fit banknotes.

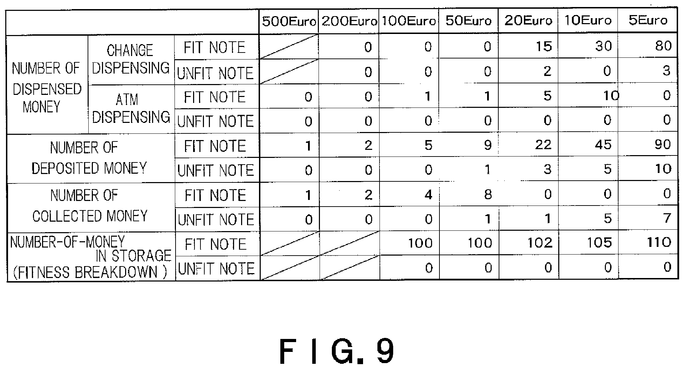

Fig. 9 is a table showing tabulated data of the log information of the settlement process and the account transaction, in such a manner that the number of fit banknotes of each denomination and the number of unfit banknotes of each denomination are separated from each other. The table shown in Fig. 8 discretely shows log information for each settlement process and each account transaction. By tabulating log information of the settlement process and the account transaction for a predetermined period of time (for example, one day, one week, one month, etc.), the control unit 190 of the money settlement apparatus 11 can create tabulated data (transaction information) shown in Fig. 9. Similarly to the log information shown in Fig. 8, the tabulated data shown in Fig. 9 are stored in the memory 170.

The number of dispensed money is the number of banknotes having been dispensed in the settlement process and in the account transaction, which is divided into the number of banknotes having been dispensed in the settlement process (change dispensing operation) and the number of banknotes having been dispensed in the account transaction (ATM-like dispensing operation). Further, the number of banknotes having been dispensed in the change dispensing operation is divided into the number of fit banknotes and the number of unfit banknotes, and the number of banknotes having been dispensed in the ATM-like dispensing operation is divided into the number of number of fit banknotes and the number of unfit banknotes. In the example shown in Fig. 9, in the change dispensing operation, two 20-euro unfit banknotes and three 50-euro unfit banknotes are dispensed. In the ATM-like dispensing operation, no unfit banknote is dispensed. Other dispensed money is dispensed as a fit banknote.

On the other hand, the number of deposited money is the number of banknotes having been deposited in the settlement process and in the account transaction, and is divided into the number of fit banknotes and the number of unfit banknotes. In the example shown in Fig. 9, one 50-euro unfit banknote, three 20-euro unfit banknotes, five 10-euro unfit banknotes and ten 5-euro unfit banknotes are deposited. Other deposited banknotes are fit banknotes.

The number of money to be collected is the number of banknotes to be collected from the storing unit 150. The storing unit 150 has a reference value for each denomination. An excessive banknote over the reference value is collected from the storing unit 150. In addition, an unfit banknote is also to be collected from the storing unit 150. Namely, the number of excessive banknotes and the number of unfit banknotes are shown as the number of money to be collected. The excessive banknotes and the unfit banknotes may be stored into a collecting stacker which is different from the normal storage.

The number of banknotes stored in the storing unit shows the number of banknotes of each denomination at the present moment in the storing unit 150 in such a manner that the number of fit banknotes and the number of unfit banknotes are separated from each.

In the example shown in Fig. 9, upon opening of a store, the storages for 5-euro banknote to 100-euro banknote respectively store one hundred banknotes, for example. In the storage for 50-euro banknote and the storage for 100-euro banknote, a reference value is set as one hundred, for example. On the other hand, in the storages for 5-euro banknote to 20-euro banknotes, a reference value is set as two hundred, for example.

The storages for 50-euro banknote and for 100-euro banknote respectively store one hundred banknotes, and have the reference value set as one hundred. Thus, excessive 50-euro banknote and 100-euro banknote are counted as banknotes to be collected. Thus, in Fig. 9, the number of banknotes stored in the storage for 50-euro banknote and the number of banknotes stored in the storage for 100-euro banknote are one hundred.

The storages for 5-euro banknote to 20-euro banknote respectively store one hundred banknotes, and have the reference value set as two hundred. Thus, the number of banknotes stored in each storage increases by the number of deposited fit banknotes, and decreases by the number of dispensed fit banknotes. The number of banknotes increases by the deducted number of banknotes. For example, as shown in Fig. 9, in the storage for 5-euro banknote, the number of deposited fit banknotes is ninety while the number of dispensed fit banknotes is eighty, whereby the number of 5-euro banknotes increases by ten. Thus, the number of banknotes stored in the storage for 5-euro banknote is one hundred ten. Similarly, in the storage for 10-euro banknote, the number of deposited fit banknotes is forty-five while the number of dispensed fit banknotes is forty, whereby the number of 10-euro banknotes increases by five. Thus, the number of banknotes stored in the storage for 10-euro banknote is one hundred five. In the storage for 20-euro banknote, the number of deposited fit banknotes is twenty two while the number of dispensed fit banknotes is twenty, whereby the number of 20-euro banknotes increases by two. Thus, the number of banknotes stored in the storage for 20-euro banknote is one hundred two.

Further, a large denomination banknote such as a 200-euro banknote and a 500-euro banknote is not dispensed in this operation. Thus, the number of deposited 200-euro banknotes and the number of deposited 500-euro banknotes are counted as the number of banknotes to be collected. Thus, the number of 200-euro banknotes and the number of 500-euro banknotes are both zero.

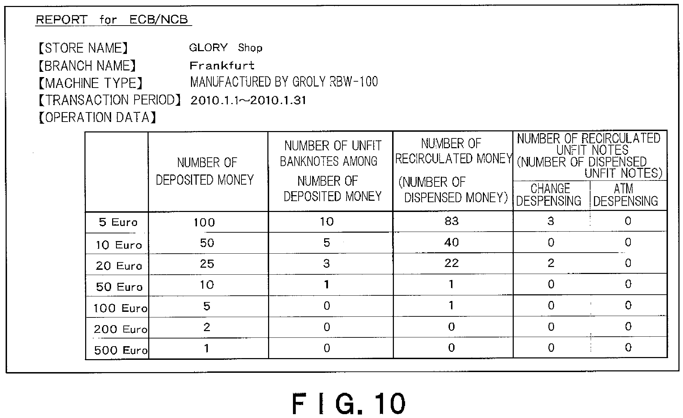

Fig. 10 is a display example of a transaction report which is created based on the tabulated data shown in Fig. 9.

For example, according to the aforementioned ECB decision, the cash handlers must periodically submit a report (transaction information) including master data and operation data, to the ECB (European Central Bank) or the NCB (National Central Bank). As described above, when a store which sells merchandise performs not only the settlement process but also the account transaction such as the ATM-like dispensing operation, it is considered that such a store is imposed to periodically submit, to the central bank, a transaction report including master data and operation data.

The master data are data including information about the money settlement apparatus, such as a type of the money settlement apparatus 11 that judges a fitness and a manufacturer's name of the money settlement apparatus 11 and so on, and store information such as a store name in which the money settlement apparatus 11 is installed. The master data are stored in the memory 170 in advance. Since the money settlement apparatus 11 judges a banknote fitness, the specification of the type of the money settlement apparatus 11 is needed in order to check that the type of the money settlement apparatus 11 is authorized by the regulation.

The operation data includes information about an amount of money settled by the settlement process by the money settlement apparatus 11 and information about an amount of money recirculated by a dispensing operation in the account transaction, in such a manner that the number of fit banknotes of each denomination and the number of unfit banknotes of each denomination are separated from each other. For example, the operation data are data including the total number of handled banknotes of each denomination, the number of processed unfit banknotes thereamong, and further the number of recirculated unfit banknotes thereamong (the number of dispensed unfit banknotes). The operation data can be obtained from the tabulated data shown in Fig. 9.

The transaction report shown in Fig. 10 is created by the control unit 190 of each money settlement apparatus 11, and is outputted by the communication unit 180 to the money management apparatus 25 and the printer 27. The money management apparatus 25 stores the contents of each transaction report from the money settlement apparatus 11. The printer 27 prints these transaction reports. Each of the money settlement apparatuses 11 may output a transaction report only to the money management apparatus 25, and the money management apparatus 25 may transmit the transaction reports of the respective money settlement apparatuses 11.

The transaction report shown in Fig. 10 includes, as the master data, a store name, a branch name, a type of the money settlement apparatus 11, and information about a transaction period of the tabulated log information, and, as the operation data, the number of deposited banknotes, the number of unfit banknotes among the deposited banknotes, the number of recirculated banknotes (the number of dispensed banknotes) and the number of recirculated unfit banknotes (the number of dispensed unfit banknotes).

Herein, the number of deposited banknotes corresponds to a sum of the number of deposited fit banknotes and the number of deposited unfit banknotes. The number of unfit banknotes among the deposited banknotes corresponds to the number of unfit banknotes among the number of deposited banknotes shown in Fig. 9. The number of recirculated banknotes (the number of dispensed banknotes) corresponds to a sum of the number of banknotes dispensed in the change dispensing operation and the number of banknotes dispensed in the ATM-like dispensing operation in Fig. 9. Further, the number of recirculated unfit banknotes (the number of dispensed unfit banknotes) is divided into the number of unfit banknotes dispensed in the change dispensing operation and the number of unfit banknotes dispensed in the ATM-like dispensing operation.

The number of recirculated fit banknotes can be easily calculated from the number of recirculated banknotes (the number of dispensed banknotes) and the number of recirculated unfit banknotes (the number of dispensed unfit banknotes). In addition, the number of recirculated fit banknotes may be included in the transaction report. The number of recirculated unfit banknotes can be easily calculated from the number of recirculated banknotes (the number of dispensed banknotes) and the number of recirculated fit banknotes. Thus, even when the number of recirculated fit banknotes is shown instead of the number of recirculated unfit banknotes, it can be regarded that the number of recirculated unfit banknotes is substantially shown in the transaction report.

Further, the total number of handled banknotes is a sum of the number of deposited banknotes and the number of recirculated banknotes. Thus, when both of the number of deposited banknotes and the number of recirculated banknotes are shown, it can be regarded that the total number of handled banknotes is substantially shown in the transaction report.

Such a transaction report is submitted to the ECB or the NCE. In the example shown in Fig. 10, unfit banknotes are dispensed in the change dispensing operation in the settlement process, but no unfit banknote is dispensed in the ATM-like dispensing operation in the account transaction. Thus, the example is not considered to infringe on the ECB decision.

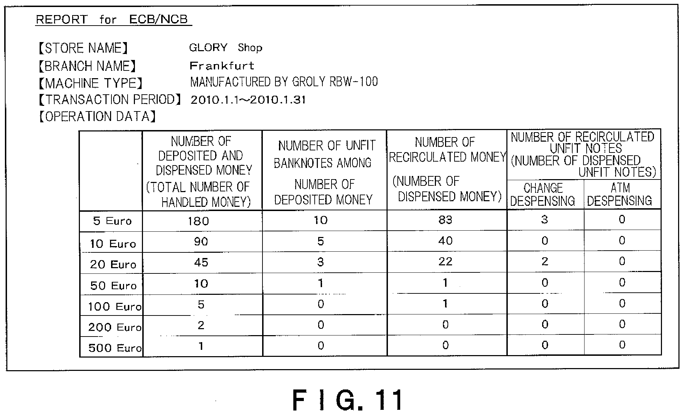

Fig. 11 is another display example of the transaction report which is created based on the tabulated data shown in Fig. 9. The transaction report of Fig. 10 shows the number of deposited banknotes, while the transaction report of Fig. 11 shows the number of deposited and dispensed banknotes (the total number of handled banknotes). The number of deposited and dispensed banknotes (the total number of handled banknotes) is a sum of the number of deposited banknotes and the number of recirculated banknotes (the number of dispensed banknotes). Other data of the transaction report shown in Fig. 11 are the same as the data of the transaction report shown in Fig. 10.

The money transaction system 2 according to this embodiment may submit the transaction report shown in Fig. 11 to the central bank.

In this manner, even in a store selling merchandise and so on, the money transaction system 2 according to this embodiment can perform an operation under the regulation such as the ECB decision, and can easily output information imposed to be reported to the central bank as a transaction report.

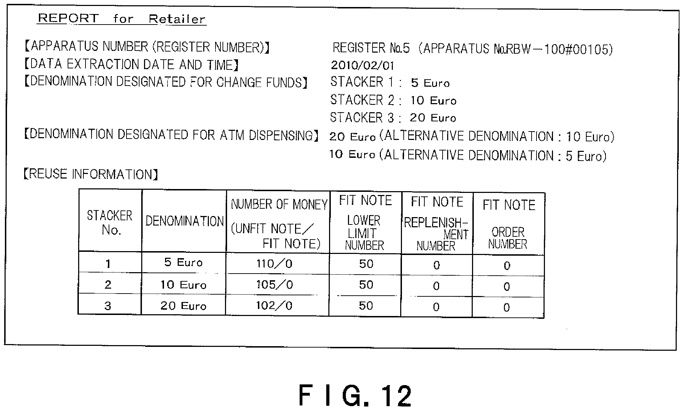

Fig. 12 is a display example of a store report. The store report includes information to be used in a store, and is created irrespective of a regulation such as the ECB decision. For example, the tabulated data (transaction data) shown in Fig. 9 includes number-of-fit-banknotes information for each denomination and number-of-unfit-banknotes information for each denomination stored in the storing unit 150. Thus, the money settlement apparatus 11 can inform a staff of the number of fit banknotes to be replenished into the storing unit 150, based on the number-of-banknotes information.

The example shown in Fig. 12 shows, for each of the storages (stackers 1 to 3) for 5-euro banknote to 20-euro banknote, the current number of money, the minimum number of fit banknotes, the number of fit banknotes to be replenished and the number of ordered fit banknotes. The minimum number of fit banknotes is a lower limit value of banknotes (fit banknotes) stored in the respective stackers 1 to 3, and is stored in the memory 170 in advance. When the number of banknotes (fit banknotes) falls below the lower limit, it is necessary to replenish the stacker with a fit banknote. In this embodiment, the lower limit value of the stacker for 5-euro banknote (10-euro banknote, 20-euro banknote) is set (designated) as fifty. Thus, when the number of fit 5-euro banknotes (10-euro banknotes, 20-euro banknotes) falls below fifty, a staff should replenish a 5-euro banknote (10-euro banknote, 20-euro banknote).

The number of fit banknotes to be replenished is stored in the memory 170 in advance. The number of fit banknotes to be replenished can be optionally set by a store. For example, in a case where the number of fit banknotes to be replenished is set as one hundred, when the number of fit 5-euro banknotes (10-euro banknotes, 20-euro banknotes) falls below fifty, one hundred is shown in the column of the number of fit banknotes to be replenished.

The number of ordered fit banknotes is the number of banknotes that has been ordered to be replenished by a CIT (Cash In Transit). Since the number of banknotes to be replenished is set in advance, when the number of banknotes (fit banknotes) falls below the lower limit value, the money settlement apparatus 11 can automatically give an order to replenish it with money to the CIT. In view of the number of ordered fit banknotes, a staff can confirm that the replenishment order has been given to the CIT. Generally, when the replenishment order has been given to the CIT, the number of ordered fit banknotes equals to the number of fit banknotes to be replenished.

In the example shown in Fig. 12, the number of fit 5-euro banknotes (10-euro banknotes, 20-euro banknotes) is not less than fifty (not less than the lower limit value). Thus, the number of fit banknotes to be replenished and the number of ordered fit banknotes are zero for each denomination.

The communication unit 180 of each money settlement apparatus 11 can output such a store report. The printer 27 prints the store report of each money settlement apparatus 11. A staff can know, for each money settlement apparatus 11, the current number of money of each denomination, the number of insufficient money of each denomination and a replenishment order condition. In this manner, the money settlement apparatus 11 can provide, based on tabulated data, a store report including information useful to the store.

As described above, the money transaction system 2 according to this embodiment can output, with the use of transaction information, not only a transaction report imposed to be submitted to a central bank or the like, but also a store report including information useful to the store.

Although the banknote fitness is explained in the above embodiment, a banknote authenticity may be similarly included in a transaction report. Note that a counterfeit banknote must not be recirculated (dispensed) both in the settlement process and in the account transaction. Thus, when a counterfeit banknote is deposited, the money settlement apparatus 11 must collect all the counterfeit banknotes.

### (Second Embodiment)

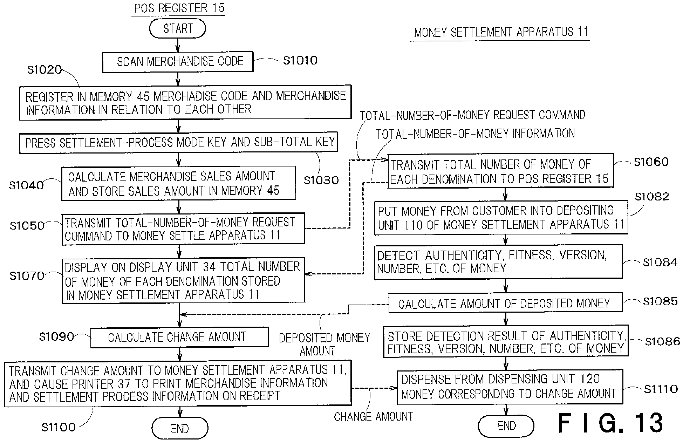

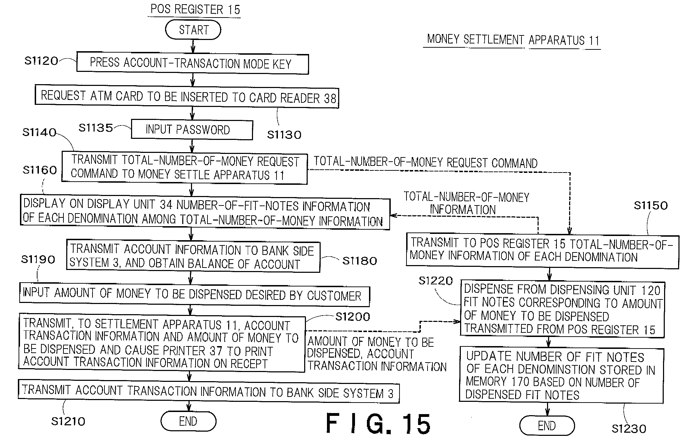

Figs. 13 and 15 are flowcharts showing operations of the money transaction system 2 according to a second not claimed embodiment. The money transaction system 2 according to the second not claimed embodiment can perform a settlement process in which a merchandise price is paid by money, and an account transaction in which a merchandise price is paid by using deposit money in a bank account or money is withdrawn from the deposit money in the bank account. The account transaction in which money is withdrawn from the deposit money in the bank account is a transaction (ATM-like dispensing operation) similar to a money withdrawal operation using an ATM (automated teller machine) in a bank or the like. It goes without saying that the money transaction system 2 can deal with a credit payment using a credit card. However, since a credit payment, which does not use money, is not directly related to this embodiment, description thereof is omitted.

### [Settlement Process: Fig. 13]

When a customer purchases merchandise, the POS register 15 performs a merchandise sales registration process. In the sales registration process, for example, the code scanner 36 scans a merchandise code attached to the merchandise (S1010), and the control unit 44 retrieves the merchandise file based on the merchandise code, and reads out merchandise information, such as a merchandise name and a unit price, corresponding to the merchandise code. Then, the control unit 44 registers, in the memory 45, the merchandise code and the merchandise information in relation to each other (S1020). After the sales registration for all the merchandise to be purchased by the customer have been completed, a staff presses down a settlement-process-mode key and a sub-total key (S1030).

The POS register 15 may be configured such that it performs the settlement process unless an account-transaction-mode key is pressed down. In this case, when the settlement process is performed, it is not necessary for an operator to operate the mode key 33 or a mode key of the touch panel 43. In addition, in the step S1030, it is sufficient for the staff to press down the sub-total key.

When the staff has pressed down the settlement-process-mode key and the sub-total key, the control unit 44 calculates a sales amount of the merchandise, and registers the sales amount in the memory 45 (S1040). Simultaneously, the communication unit 46 transmits a total-number-of-banknotes request command to the money settlement apparatus 11 (S1050).

Upon receipt of the total amount request command, the money settlement apparatus 11 transmits, to the POS register 15, the total-number-of-banknotes information of banknotes of each denomination stored in storing units 150 (S1060). The total-number-of-banknotes information is information showing the total number of reusable fit banknotes and the number of reusable unfit banknotes, which are stored in the money settlement apparatus 11.

When the money settlement apparatus 11 stores money by denomination in such a manner that a fit banknote and an unfit banknote are separated from each other, the total-number-of-banknotes information is the number of fit banknotes stored in the storage for fit banknotes, the number of unfit banknotes stored in the storage for unfit banknotes, and a sum thereof.

When the money settlement apparatus 11 stores money by denomination in such a manner that fit banknotes and unfit banknotes are stored in a mixed state, the total-number-of-banknotes information is the number of banknotes of respective denominations, which are stored in the storage of the money settlement apparatus 11. In this case, the memory 170 stores the order of fit banknotes and unfit banknotes. Thus, the number of fit banknotes and the number of unfit banknotes may be included in the total-number-of-banknotes information.

In this manner, the total-number-of-banknotes information can include, in addition to the total number of banknotes of respective denominations, the number of banknotes of each denomination in such a manner that the number of fit banknotes and the number of unfit banknotes are separated from each other.

In the settlement process, the money settlement apparatus 11 is permitted to dispense not only a fit banknote but also an unfit banknote. Thus, upon receipt of the total-number-of-banknotes information about banknotes of each denomination that are stored in the money settlement apparatus 11, the POS register 15 displays the total-number-of-banknotes information for each denomination, on the operator display unit 34 (S1070).

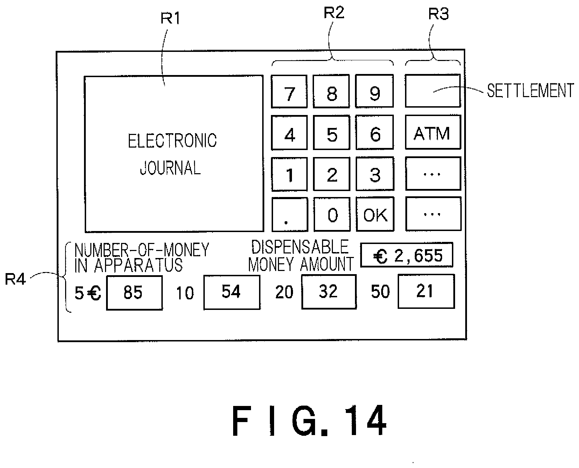

Fig. 14 is a view showing a screen of the operator display unit 34 (hereinafter referred to also imply as "display unit 34") in the settlement process. A journal display area R1 displays information such as a name of merchandise purchased by a customer, the number of merchandise, an amount of money given by the customer, an amount of change to be paid to the customer, date and time, etc.

The contents displayed on the journal display area R1 are displayed on the customer display unit 35, and also printed on a receipt. A numeric-key display area R2 displays numeric keys and so on. A mode-key display area R3 displays mode keys such as a settlement-process mode key, an account-transaction-mode key and so on. Further, the number-of-banknotes display area R4 displays the number of money of each denomination stored in the money settlement apparatus 11.

In the settlement process, the display unit 34 displays the total-number-of-banknotes information for each denomination, on the number-of-banknotes display area R4. Further, the total display area R4 displays a total amount of money that can be dispensed (dispensable money amount).

By checking the number-of-banknotes display area R4, a staff can judge whether the number of banknotes of each denomination stored in the money settlement apparatus 11 is sufficient or not. When money of a certain denomination in the money settlement apparatus 11 is insufficient, the staff can replenish money of this denomination, or selects an alternative dispensing operation in which money of another denomination is dispensed. The alternative dispensing operation is described hereafter.

Then, the staff puts the money given by the customer into the deposing unit 110 of the money settlement apparatus 11 (S1082). The money having been put into the money settlement apparatus 11 is transported to the storing unit 150 by the transport unit 130. The recognition unit 140 recognizes an authenticity, a fitness, a version, the number and so on of the money being transported (S1084), and calculates an amount of the deposited money (S1085). The memory 170 stores, in addition to the deposited money amount, the detection result such as the authenticity, the fitness, the version and the number of the deposited money (S1086). Namely, at this time, the memory 170 can store the deposited money by denomination in such a manner that at least a fit banknote and an unfit banknote are separated from each other.

The control unit 44 deducts the sales amount stored in the memory 45 from the deposited money amount so as to calculate a change amount (S1090). The POS register 15 transmits the change amount to the money settlement apparatus 11, and causes the printer 37 to print the merchandise information and the settlement process information on a receipt (S1100).

The money settlement apparatus 11 dispenses, from the dispensing unit 120, money corresponding to the change amount having been transmitted from the POS register 15 (S1110). The staff passes the change, the receipt and the merchandise to the customer, and the settlement process is finished.

Although there is a regulation like the aforementioned ECB decision, in the normal money-based settlement process performed in a store, a fit banknote and an unfit banknote may be dispensed as a change, which is different from a business handled by cash handlers such as banking establishments. Thus, in the normal money-based settlement process, the money settlement apparatus 11 can dispense, as a change, a fit banknote and an unfit banknote with no distinction.

After the money handling process, the money settlement apparatus 11 has to update, the number of fit banknotes of each denomination and the number of unfit notes of each denomination, which are stored in the memory 170, based on the number of fit banknotes that has been deposited or dispensed and the number of unfit banknotes that has been deposited or dispensed, in order to display the number of fit banknotes in the account transaction to be explained below.

### [Account Transaction (ATM-like dispensing Operation) : Fig. 15]

When a customer withdraws money from the money transaction system 2, by using deposit money in a bank account, a staff operates the mode key 33 of the POS register 15 or the touch panel 43 thereof to press the account-transaction-mode key (S1120). When the staff presses the account-transaction-mode key, the POS register 15 requires the staff to insert a bank ATM card of the customer to the card reader 38 (S1130). The customer hands his/her bank ATM card to the staff, and the staff passes the card through the card reader 38. The customer inputs a password by operating a key pad (not shown) (S1135).

Then, the communication unit 46 of the POS register 15 transmits a total-number-of-banknotes request command to the money settlement apparatus 11 (S1140).

Upon receipt of total-number-of-banknotes request command, the money settlement apparatus 11 transmits total-number-of-banknotes information for each denomination of banknotes that are stored in the storing unit 150 (S1150).

In the account transaction, the money settlement apparatus 11 can dispense only fit banknotes. Thus, upon receipt of total-number-of-banknotes information for each denomination of banknotes stored in the money settlement apparatus 11, the money settlement apparatus 11 displays only the number-of-fit-banknotes information for each denomination on the operator display unit 34 (S1160). As described above, total-number-of-banknotes information includes, in addition to total-number-of-banknotes information for each denomination, the number-of-fit-banknotes information for each denomination and the number-of-unfit-banknotes information for each denomination so as to be separated from each other. Thus, the POS register 15 can selectively display only the number of fit banknotes among the total-number-of-banknotes information.

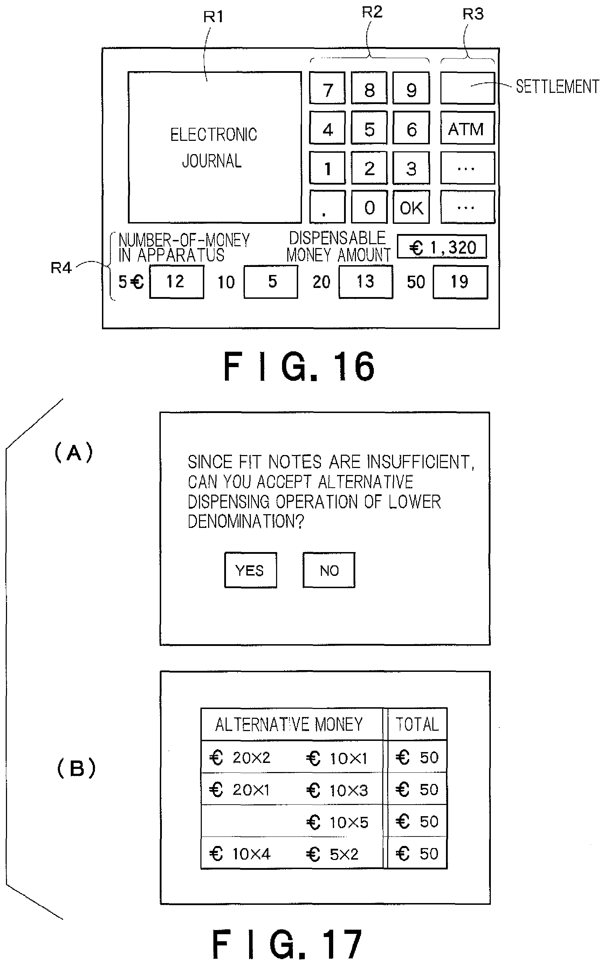

Fig. 16 is a view showing a screen of the display unit 34 in the account transaction. In the account transaction, the display unit 34 displays number-of-fit-banknotes information for each denomination on the number-of-banknotes display area R4. Further, a total amount of money that can be dispensed (dispensable money amount) is displayed on the number-of-banknotes display area R4.

By checking the number-of-banknotes display area R4, a staff can judge whether the number of fit banknotes of each denomination stored in the money settlement apparatus 11 is sufficient or not. When the number of fit banknotes of a certain denomination in the money settlement apparatus 11 is insufficient, the staff can replenish fit banknotes of this denomination, or selects an alternative dispensing operation in which fit banknote of another denomination(s) are dispensed. The alternative dispensing operation is described hereafter.

After the step S1135 in which an account number and a security code (or a password) are inputted, the POS register 15 transmits, to the system in bank 3, account information including the account number and the security code (or the password), and obtains a deposit balance of the account and so on from the system in bank 3 (S1180). The POS register 15 permits money to be dispensed within the limit of the deposit balance. The staff or the customer operates the keyboard 32 or the like to input an amount of money to be dispensed which is desired by the customer (S1190). At this time, an amount of money to be dispensed should be not more than the deposit balance of the account.

When the amount of money to be dispensed, which is not more than the deposit balance, is inputted, the POS register 15 transmits, to the cash settlement apparatus 11, an account number, the amount of money to be dispensed, account transaction information such as a deposit balance after the dispensing operation, and causes the printer 37 to print the account transaction information on a receipt (S1200). Further, the POS register 15 transmits the account transaction information to the system in bank 3 (S1210). The system in bank 3 updates a deposit balance of the account of the customer.

The money settlement apparatus 11 dispenses, from the dispensing unit 120, money corresponding to the amount of money to be dispensed that has been transmitted from the POS register 15 (S1220). At this time, the money transaction system 2 performs the ATM-like dispensing operation in the same manner as the cash handlers. Thus, when there is a regulation like the ECB decision, the money transaction system 2 must dispense only a fit banknote and is forbidden to dispense an unfit banknote, similarly to the financial affairs performed by the cash handlers. Therefore, the cash settlement apparatus 11 dispenses only fit banknotes. For example, when fit banknotes and unfit banknotes are stored in discrete storages of the storing unit 150, the money settlement apparatus 11 feeds out money from the fit banknote storage, and sends the money to the dispensing unit 120. When fit banknotes and unfit banknotes are stored in the storing unit 150 in a mixed state, only fit banknotes are sent to the dispensing unit 120, based on the order of fit banknotes and unfit banknotes stored in the memory 170. Then, the banknote settlement apparatus 11 updates the number of fit banknotes of each denomination stored in the memory 170, based on the number of fit banknotes that have been dispensed (S1230).

When the staff hands the money and the receipt to the customer, the account transaction is finished.

The account transaction may include a direct debit of a merchandise price. Namely, a customer can settle the merchandise price by using a deposit in his/her bank account, and perform an ATM-like dispensing operation in which money is dispensed from the bank account. For example, when the customer pays 20 euro as the merchandise price and withdraws 80 euro from the bank account (ATM-like dispensing operation), the money transaction system 2 withdraws 100 euro from the bank account. 20 euro out of 100 euro is taken as the merchandise price and the remaining 80 euro is dispensed to the customer.

As described above, in the money transaction system 2 according to the second embodiment, the display unit 34 of the POS register 15 is configured to display the number of money in the money settlement apparatus 11 differently between when the settlement process is performed and when the account transaction is performed. Thus, a staff can check, in the settlement process, the total number of banknotes including the number of fit banknotes and the number of unfit banknotes stored in the money settlement apparatus 11, and can check, in the account transaction, only the number of fit banknotes stored in the money settlement apparatus 11. The money transaction system 2 can dispense both fit banknotes and unfit banknotes in the settlement process, and can dispense only fit banknotes in the account transaction. Thus, the money transaction system 2 according to the second embodiment can efficiently use money, without enlarging the money settlement apparatus 11.

### (Alternative Dispensing Operation)

In general, the money settlement apparatus 11 selects denominations of banknotes to be dispensed as a change, such that the number of banknotes is minimum. Namely, the money settlement apparatus 11 is configured to make a change by the least number of banknotes.

However, when banknotes of a denomination to be dispensed for the least number of banknotes are insufficient, the money settlement apparatus 11 may be set to perform an alternative dispensing operation in which banknotes of a denomination that is smaller than the required denomination are dispensed. In this manner, in a dispensing operation during the settlement process and the account transaction, when total-number-of-banknotes information or number-of-fit-banknotes information informs that banknotes of a desired denomination are insufficient, the POS register 15 ca display a guidance by which an alternative dispensing operation, in which banknotes of a denomination that is smaller than the required denomination are dispensed, can be selected, after the step S1090 in Fig. 13 or the step S1190 in Fig. 15.

Figs. 17(A) and 17(B) are examples of screen displayed on the display unit 34 of the POS register 15, when fit banknotes are insufficient in the account transaction. Fig. 17(A) is a screen by which whether the alternative dispensing operation is performed or not is selected, and Fig. 17(B) is a screen by which one combination of money to be alternatively dispensed is selected.

For example, in the step S1190, when banknotes of a first denomination, which is required for the least number of money to be dispensed, are insufficient, as shown in Fig. 17(A), the POS register 15 asks a staff or a customer whether an alternative dispensing operation, in which money of a denomination that is smaller than the first denomination is dispensed or not, is allowed or not. When the alternative dispensing operation is rejected (when "NO" is selected), the account transaction is cancelled.

When the alternative dispensing operation is allowed (when "YES" is selected), as shown in Fig. 17(B), the POS register 15 displays combinations of alternative money. The alternative money is constituted by giving priority to the largest denomination among denominations that are smaller than the first denomination. For example, when 50 euro is dispensed but 50-euro banknotes are insufficient, the POS register 15 displays an alternative money constituted by giving priority to a 20-euro banknote which is the second largest denomination than a 50-euro banknote. Namely, the POS register 15 displays an alternative money composed of two 20-euro banknotes and one 10-euro banknote. Further, the POS register 15 displays other alternative money options.

A staff or a customer can select a desired combination among these alternative money options. When the number-of-banknotes information in Fig. 16 informs that the number of 20-euro banknotes is small, a staff can select five 10-euro banknotes as the alternative money.

When a denomination(s) of the alternative money is determined, the POS register 15 transmits the amount of money to be dispensed and the denomination of the alternative money to the money settlement apparatus 11, in the step S1200. In the step S1220, the money settlement apparatus 11 performs a dispensing operation based on the denomination of the alternative money.

Since an alternative dispensing operation in the settlement process can be easily known from the alterative dispensing operation in the account transaction, description thereof is omitted.

### (Modification Example 1)

In the above embodiment, the number-of-banknotes display area R4 numerically displays the number of banknotes of each denomination stored in the money settlement apparatus 11. However, the number of banknotes of each denomination stored in the money settlement apparatus may be conceptually displayed, without using numerical values.

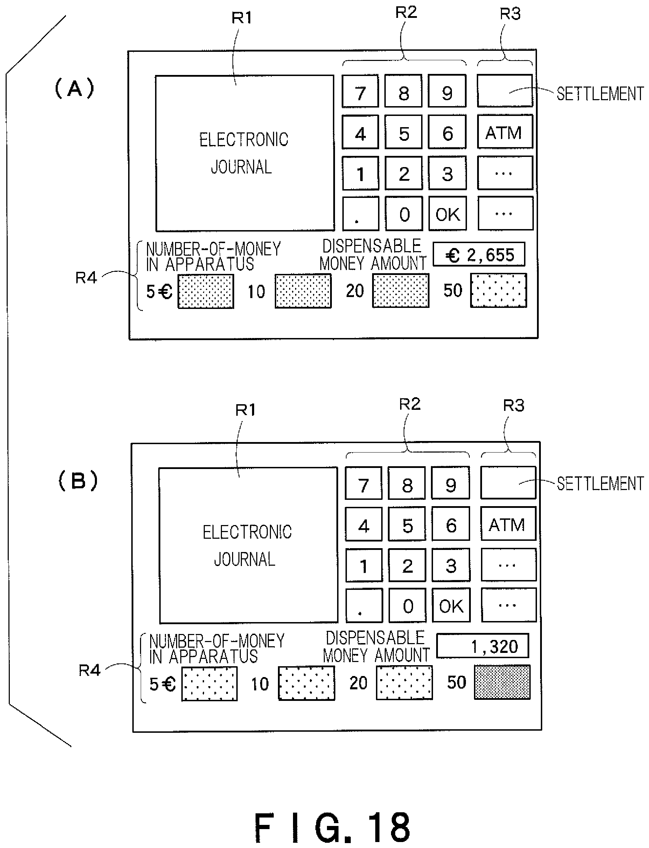

For example, as shown in Figs. 18(A) and 18(B), the number of banknotes in the number-of-banknotes display area R4 may be displayed by a color corresponding to the number of banknotes. In more detail, when the total number of banknotes or the number of fit banknotes is fifty or more, a blue color is displayed. When the number is between forty and fifty, a green color is displayed. When the number is between thirty and forty, an orange color is displayed. When the number is between twenty and thirty, a yellow color is displayed. When the number is less than twenty, a red color is displayed. Thus, even through a concrete numerical value is not displayed, a staff can conceptually understand the number of banknotes of each denomination stored in the money settlement apparatus 11. The number of banknotes of each denomination stored in the money settlement apparatus 11 and the respective colors are stored in the memory 17 in advance, in relation to each other.

Further, although not shown, the display of the banknote number information in the number-of-banknotes display area R4 may be a graph such as a histogram.

### (Modification Example 2)

When total-number-of-banknotes information or the number-of-fit-banknotes information falls below a preset value, the display unit 34 may display number-of-banknotes information. When the number of banknotes (the number of fit banknotes) of all denominations is sufficient, number-of-banknotes information is not necessarily important to a staff and a customer. Thus, when total-number-of-banknotes information or the number-of-fit-banknotes information exceeds the preset value, the POS register 15 may not display the number-of-banknotes information. In this case, the screen display of the display unit 34 become simple, whereby an error inputting operation can be restrained. The preset value is set in advance and is stored in the memory 45.

Alternatively, when total-number-of-banknotes information or the number-of-fit-banknotes information exceeds the preset value, the POS register 15 may continuously display an upper limit value. In this case, it is not until total-number-of-banknotes information or the number-of-fit-banknotes information falls below the preset value, the numerical value of number-of-banknotes information of the display unit 34 changes. Thus, unnecessary information is omitted in the display unit 34, whereby an error inputting operation can be also restrained.

Further, alternatively, when total-number-of-banknotes information or the number-of-fit-banknotes information is not less than a dispensable upper limit value in one transaction, the display unit 34 may display the dispensable upper limit value. When a dispensable upper limit value in one transaction is set, number-of-banknotes information exceeding the dispensable upper limit value is unnecessary to a staff and a customer. Thus, when the total number of banknotes or the number of fit banknotes is not less than the dispensable upper limit value, the POS register 15 may continuously display the dispensable upper limit value. In this case, it is not until total-number-of-banknotes information or the number-of-fit-banknotes information falls below the dispensable upper limit value, the numerical value of the number-of-banknotes display area 34 changes. The dispensable upper limit value is preset and stored in the memory 45. Thus, unnecessary information is omitted in the display unit 34, whereby an error inputting operation can be restrained.

### (Third Embodiment)

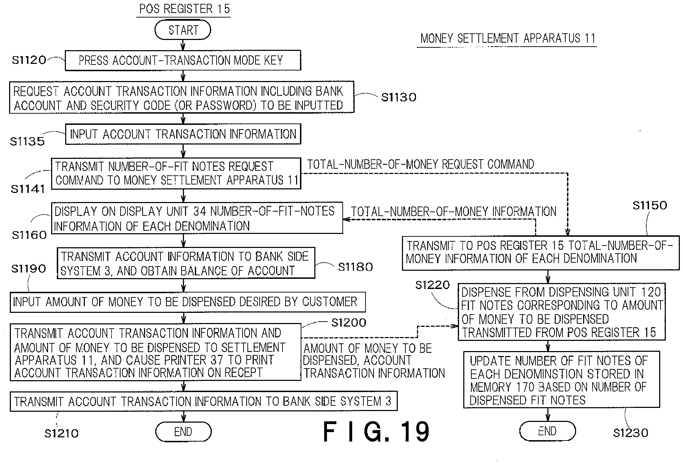

Fig. 19 is a flowchart showing an operation of the account transaction of the money transaction system 2 according to a third not claimed embodiment related to the present invention. A structure of the money transaction system 3 according to the third not claimed embodiment and a settlement operation thereof are the same as those of the money transaction system 2 according to the first embodiment.

In the first embodiment, the POS register 15 transmits a total-number-of-banknotes request command to the money settlement apparatus 11 both in the settlement process and in the account transaction (steps S1050 and S1140). On the other hand, in the third embodiment, the POS register 15 transmits a total-number-of-banknotes request command in the settlement process, while transmits a number-of-fit-banknotes request command in the account transaction. Namely, in the third embodiment, the POS register 15 transmits a number-of-banknotes request command differently between the settlement process and the account transaction.

To be more specific, in the settlement process, the POS register 15 transmits a total-number-of-banknotes request command to the money settlement apparatus 11 (S1050 in Fig. 13). In response thereto, the money settlement apparatus 11 transmits total-number-of-banknotes information to the POS register 15 (S1060). On the other hand, in the account transaction, the POS register 15 transmits a number-of-fit-banknotes request command to the money settlement apparatus 11 (S1141). In response thereto, the money settlement apparatus 11 transmits number-of-fit-banknotes information to the POS register 15 (S1151).

When the money settlement apparatus 11 stores money by denomination in such a manner that fit banknotes and unfit banknotes are separated from each other, the number-of-fit-banknotes information is the number of banknotes stored in a storage for fit notes.

When the money settlement apparatus 11 stores money by denomination in such a manner that fit banknotes and unfit banknotes are stored in a mixed state, the number-of-fit-banknotes information is the number of fit banknotes counted based on a storing order as to fitness stored in the memory 170. The control unit 190 can count the number of fit banknotes based on the storing order as to fitness stored in the memory 170.

In this manner, the POS register 15 obtains number-of-banknotes information differently between the settlement process and the account transaction, and the POS register 15 ca display the number-of-banknotes information obtained from the money settlement apparatus 11 as it is on the display unit 34. Namely, the POS register 15 needs not to select number-of-fit-banknotes information from total-number-of-banknotes information in the account transaction.

Other operations in the account transaction of the money transaction system 2 according to the third embodiment are the same as the corresponding operations of the money transaction system 2 according to the second embodiment. Thus, the third embodiment can provide the same effect as that of the second embodiment.

### (Fourth Embodiment)

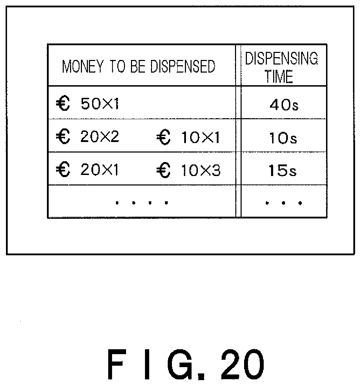

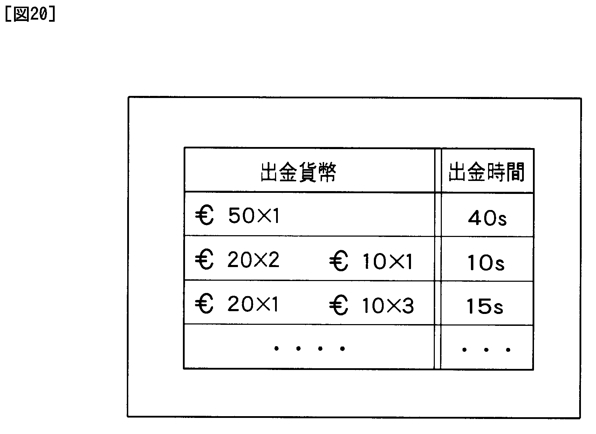

Fig. 20 is a view showing a screen displayed on the display unit 34 of the POS register 15 in the account transaction according to a fourth not claimed embodiment related to the present invention.

When the storing unit 150 of the money settlement apparatus 11 stores fit banknotes and unfit banknotes in a mixed state, it may take a long time to dispense only fit banknotes in the account transaction. For example, suppose that fit banknotes are stored in a rear part (or a bottom part) of the storing unit 150. In this case, during an operation for feeding out unfit notes and fit notes from the storing unit 150, it is necessary for the unfit banknotes to be temporarily retreated in another storage, until the fit notes of the desired number are fed out. Thus, in this case, it takes particularly a long time to dispense only the fit banknotes.

Thus, in the fourth not claimed embodiment, as shown in Fig. 20, the display unit 34 of the POS register 15 displays a guidance about combinations of money to be dispensed and a time required for the dispensing operation. A staff or customer can select one of the combinations of money to be dispensed, based on the time required for the dispensing operation.

The POS register 15 may display the guidance about the dispensing time period on the display unit 34, after the step S1190 in Fig. 15. Banknotes are fed out from the storing unit 150 of the money settlement apparatus 11 at substantially the same time intervals. Thus, the control unit 44 of the POS register 15 can calculate a dispensing time period for each money to be dispensed, based on a storing order as to money fitness stored in the memory 170.

After a staff or a customer has selected one of the combinations of money to be dispensed, the operation proceeds to the step S1200. A structure and other operations of the money transaction system 2 according to the first embodiment may be the same as the structure and the operations of the money transaction system 2 according to the first embodiment.

Fig. 20 shows combinations of money to be dispensed and dispensing time periods, when 50 euro is dispensed by a fit banknote(s). When the money to be dispensed is dispensed by a banknote whose number is the least (one 50-euro banknote), the dispensing time period is forty seconds. On the other hand, when the money to be dispensed is composed of two 20-euro banknotes and one 10-euro banknote, the dispensing time period is ten seconds. Alternatively, when the money to be dispensed is composed of one 20-euro banknote and three 10-euro banknotes, the dispensing time period is fifteen seconds. The staff or the customer can select desired money to be dispensed, by referring to these dispensing time periods. For example, the staff or the customer can select the combination of money to be dispensed which requires the shortest dispensing time period (two 20-euro banknotes and one 10-euro banknote). Thus, the money transaction system 2 according to the fourth embodiment can dispense fit banknotes in the account transaction, without keeping a customer waiting. Further, the fourth embodiment can provide the same effect as that of the first embodiment.

- 2: Money transaction system
- 3: System in bank
- 10: Checkout counter
- 11: Money settlement apparatus
- 12: Banknote depositing/dispensing apparatus
- 13: Coin depositing/dispensing apparatus
- 15: POS register
- 20: Back office
- 21: Money handling apparatus
- 25: Money management apparatus
- 26: POS management apparatus
- 27: Printer
- 110: Depositing unit
- 120: Dispensing unit
- 130: Transport unit
- 140: Recognition unit
- 150: Storing unit
- 170: Memory
- 180: Communication unit
- 190: Control unit
- 32: Keyboard
- 33: Mode key
- 34: Display device for operator
- 35: Display device for customer
- 36: Code scanner
- 37: Printer
- 44: Control unit
- 45: Memory
- 46: Communication unit

## Claims

1. A money settlement apparatus (11) comprising a depositing unit (110), a dispensing unit (120), a storing unit (150), a transport unit (130) and a recognition unit (140), the money settlement apparatus (11) configured to perform a money depositing and dispensing process, in a settlement process in which a merchandise price is paid and the apparatus (11) can dispense a fit note and an unfit note with no distinction, and in an account transaction based on a bank account in which the apparatus (11) dispenses only a fit note and is forbidden to dispense an unfit note, wherein
the depositing unit (110) is configured to deposit money to store the money into the storing unit (150);
the dispensing unit (120) is configured to dispense the money stored in the storing unit (150);
the transport unit (130) is configured to transport the money having been put into the depositing unit (110) to the storing unit (150), or is configured to transport from the storing unit (150) the stored money to be dispensed from the dispensing unit (120);
the recognition unit (140) is configured to recognize a denomination, an authenticity, a fitness, a version, and a number of pieces of the money transported by the transport unit (130), and
the storing unit (150) is configured to store, by denomination, the money recognized by the recognition unit (140),
**characterized in that** the money settlement apparatus (11) further comprises:
a memory unit (170) configured to store, by denomination, the number of pieces of the money stored by the storing unit (150),
a control unit (190) configured to control the apparatus (11), and
an output unit (180) being communicably connected to apparatuses except to the apparatus (11), wherein
the memory unit (170) stores transaction information about a number of notes of the money deposited or dispensed in the settlement process and in the account transaction in such a manner that fit notes and unfit notes are separated from each other for each denomination, whereby the fit note and the unfit note can be differentiated from each other for each denomination; and
the output unit (180) is configured to output the transaction information to the apparatuses, wherein
when the settlement process and the account transaction are repeated, log information of the settlement process and the account transaction is stored in the memory unit (170), the log information is information showing the number of fit notes for each denomination and the number of the unfit notes for each denomination, which have been deposited and dispensed in the respective settlement processes and account transactions,
the control unit (190) is configured to tabulate the log information of the settlement process and the account transaction for a predetermined period of time to create a tabulated data as the transaction information,
the tabulated data is stored in the memory unit (170),
the control unit (190) is configured to create a transaction report based on the tabulated data,
the output unit (180) is configured to output the transaction report to the apparatuses, and
the tabulated data includes
the number of banknotes of each denomination at the present moment in the storing unit (150) in such a manner that the number of fit banknotes and the number of unfit banknotes are separated from each other,
the number of excessive fit banknotes per denomination to be collected from the storing unit (150) and
the number of unfit banknotes per denomination to be collected from the storing unit (150), and
wherein the storing unit (150) has a reference value for each denomination and the number of excessive fit banknotes for a denomination corresponds to the number of fit banknotes over the reference value for that denomination.

2. The money settlement apparatus (11) according to claim 1, wherein the output unit (180) is configured to output the transaction information such that the settlement process and the account transaction are differentiated from each other.

3. The money settlement apparatus (11) according to claim 1, wherein the transaction information includes information about a denomination and the fitness of the money that is recirculated in a market by a dispensing operation.

4. The money settlement apparatus (11) according to claim 1, wherein the transaction report includes master data having information about a manufacturer of the money settlement apparatus (11), information about a type of the money settlement apparatus (11), and information about a store in which the money settlement apparatus (11) is installed.

5. The money settlement apparatus (11) according to claim 1, wherein the transaction report includes operation data having information about an amount of money settled in the settlement process by the money settlement apparatus (11), and information about an amount of money recirculated by the dispensing operation of the account transaction, in such a manner that a fit note and an unfit note are differentiated from each other for each denomination.

6. The money settlement apparatus (11) according to claim 1, wherein
the transaction information includes number-of-money information about fit notes and unfit notes of the money stored in the storing unit (150) by denomination, and the output unit (180) is configured to outputs the transaction information including the number information as a store report.

7. A money transaction system (2) comprising: a money settlement apparatus (11) according to-claim 1 and further comprising a transaction-data processing apparatus (15) communicably connected to the output unit (180) of the money settlement apparatus (11) and configured to process merchandise transaction data; wherein the transaction-data processing apparatus (15) includes: a memory unit (45) configured to store transaction data of merchandise sold in the settlement process; and a communication unit (46) communicably connected to the money settlement apparatus (11).

8. The money transaction system (2) according to claim 7, wherein the transaction information includes number-of-money information by denomination stored in the money settlement apparatus (11), and the output unit (180) is configured to outputs the transaction information including the number information as a store report.

9. The money transaction system (2) according to claim 7, wherein the money settlement apparatus (11) is configured to perform the account transaction using deposit money in a bank account, based on an instruction of the transaction-data processing apparatus (15).

## Patentansprüche

1. Geldabwicklungsvorrichtung (11), umfassend eine Einzahlungseinheit (110), eine Auszahlungseinheit (120), eine Lagereinheit (150), eine Transporteinheit (130) und eine Erkennungseinheit (140), wobei die Geldabwicklungsvorrichtung (11) dazu konfiguriert ist, einen Geldeinzahlungs- und Geldauszahlungsprozess in einem Abwicklungsprozess, in dem ein Warenpreis bezahlt wird und die Vorrichtung (11) ohne Unterscheidung eine gebrauchstaugliche Banknote oder eine gebrauchsuntaugliche Banknote auszahlen kann, und in einer Kontotransaktion basierend auf einem Bankkonto auszuführen, in der die Vorrichtung (11) nur eine gebrauchstaugliche Banknote auszahlt und es ihr verboten ist, eine gebrauchsuntaugliche Banknote auszuzahlen, wobei
die Einzahlungseinheit (110) dazu konfiguriert ist, Geld einzuzahlen, um das Geld in der Lagereinheit (150) zu lagern;
die Auszahlungseinheit (120) dazu konfiguriert ist, das in der Lagereinheit (150) gelagerte Geld auszuzahlen;
die Transporteinheit (130) dazu konfiguriert ist, das in die Einzahlungseinheit (110) hineingegebene Geld zu der Lagereinheit (150) zu transportieren, oder dazu konfiguriert ist, das gelagerte Geld von der Lagereinheit (150) zu transportieren, um von der Auszahlungseinheit (120) ausgezahlt zu werden;
die Erkennungseinheit (140) dazu konfiguriert ist, einen Nennwert, eine Authentizität, eine Gebrauchstauglichkeit, eine Version und eine Stückzahl des Geldes, das von der Transporteinheit (130) transportiert wird, zu erkennen, und
die Lagereinheit (150) dazu konfiguriert ist, das von der Erkennungseinheit (140) erkannte Geld nach Nennwert zu lagern,
**dadurch gekennzeichnet, dass** die Geldabwicklungsvorrichtung (11) ferner Folgendes umfasst:
eine Speichereinheit (170), die dazu konfiguriert ist, die Stückzahl des von der Lagereinheit (150) gelagerten Geldes nach Nennwert zu speichern,
eine Steuereinheit (190), die dazu konfiguriert ist, die Vorrichtung (11) zu steuern, und
eine Ausgabeeinheit (180), die kommunizierend mit Vorrichtungen außer der Vorrichtung (11) verbunden ist, wobei
die Speichereinheit (170) Transaktionsinformationen über eine Anzahl von Banknoten des Geldes, das im Abwicklungsprozess und der Kontotransaktion eingezahlt oder ausgezahlt wurde, auf eine Weise speichert, dass gebrauchstaugliche Banknoten und gebrauchsuntaugliche Banknoten für jeden Nennwert voneinander getrennt werden, wodurch die gebrauchstaugliche Banknote und die gebrauchsuntaugliche Banknote für jeden Nennwert voneinander unterschieden werden können; und
die Ausgabeeinheit (180) dazu konfiguriert ist, die Transaktionsinformationen an die Vorrichtungen auszugeben, wobei
wenn der Abwicklungsprozess und die Kontotransaktion wiederholt werden, Protokollinformationen des Abwicklungsprozesses und der Kontotransaktion in der Speichereinheit (170) gespeichert werden, wobei die Protokollinformationen Informationen sind, die die Anzahl gebrauchstauglicher Banknoten für jeden Nennwert und die Anzahl gebrauchsuntauglicher Banknoten für jeden Nennwert angeben, die in den jeweiligen Abwicklungsprozessen und den Kontotransaktionen eingezahlt und ausgezahlt wurden,
die Steuereinheit (190) dazu konfiguriert ist, die Protokollinformationen des Abwicklungsprozesses und der Kontotransaktion für eine zuvor bestimmte Zeitperiode zu tabellieren, um tabellierte Daten als die Transaktionsinformationen zu erstellen,
die tabellierten Daten in der Speichereinheit (170) gespeichert sind,
die Steuereinheit (190) dazu konfiguriert ist, einen Transaktionsbericht basierend auf den tabellierten Daten zu erstellen,
die Ausgabeeinheit (180) dazu konfiguriert ist, den Transaktionsbericht an die Vorrichtungen auszugeben, und
die tabellierten Daten Folgendes beinhalten:
die Anzahl von Banknoten von jedem Nennwert zum gegenwärtigen Zeitpunkt in der Lagereinheit (150) auf so eine Weise, dass die Anzahl von gebrauchstauglichen Banknoten und die Anzahl gebrauchsuntauglicher Banknoten voneinander getrennt sind,
die Anzahl von überschüssigen gebrauchstauglichen Banknoten pro Nennwert, die von der Lagereinheit (150) gesammelt werden sollen, und
die Anzahl von gebrauchsuntauglichen Banknoten pro Nennwert, die von der Lagereinheit (150) gesammelt werden sollen,
wobei die Lagereinheit (150) einen Referenzwert für jeden Nennwert aufweist und die Anzahl von überschüssigen gebrauchstauglichen Banknoten für einen Nennwert der Anzahl von gebrauchstauglichen Banknoten über dem Referenzwert für diesen Nennwert entspricht.

2. Geldabwicklungsvorrichtung (11) nach Anspruch 1, wobei die Ausgabeeinheit (180) dazu konfiguriert ist, die Transaktionsinformationen auszugeben, sodass der Abwicklungsprozess und die Kontotransaktion voneinander unterschieden werden.

3. Geldabwicklungsvorrichtung (11) nach Anspruch 1, wobei die Transaktionsinformationen Informationen über einen Nennwert und die Gebrauchstauglichkeit des Geldes, das in einen Markt durch einen Auszahlungsvorgang zurückgeführt wird, beinhaltet.

4. Geldabwicklungsvorrichtung (11) nach Anspruch 1, wobei der Transaktionsbericht Stammdaten beinhaltet, die Informationen über einen Hersteller der Geldabwicklungsvorrichtung (11), Informationen über einen Typ der Geldabwicklungsvorrichtung (11) und Information über ein Geschäft, in dem die Geldabwicklungsvorrichtung (11) installiert ist, aufweisen.

5. Geldabwicklungsvorrichtung (11) nach Anspruch 1, wobei der Transaktionsbericht Betriebsdaten beinhaltet, die Information über einen Betrag des in dem Abwicklungsprozess durch die Geldabwicklungsvorrichtung (11) abgewickelten Geldes und Information über einen Betrag des Geldes, das durch den Auszahlungsvorgang der Kontotransaktion in einer Weise zurückgeführt wird, dass eine gebrauchstaugliche Banknote und eine gebrauchsuntaugliche Banknote für jeden Nennwert voneinander unterschieden werden, aufweisen.

6. Geldabwicklungsvorrichtung (11) nach Anspruch 1, wobei die Transaktionsinformationen Geldanzahl-Informationen über gebrauchstaugliche Banknoten und gebrauchsuntaugliche Banknoten des in der Lagereinheit (150) nach Nennwert gelagerten Geldes beinhalten und die Ausgabeeinheit (180) dazu konfiguriert ist, die Transaktionsinformationen, die die Anzahlinformationen beinhalten, als einen Lagerbericht auszugeben.

7. Geldtransaktionssystem (2) umfassend: eine Geldabwicklungsvorrichtung (11) nach Anspruch 1 und ferner umfassend eine transaktionsdatenverarbeitende Vorrichtung (15), die kommunizierend mit der Ausgabeeinheit (180) der Geldabwicklungsvorrichtung (11) verbunden und dazu konfiguriert ist, Warentransaktionsdaten zu verarbeiten; wobei die transaktionsverarbeitende Vorrichtung (15) Folgendes beinhaltet: eine Speichereinheit (45), die dazu konfiguriert ist, Transaktionsdaten von Waren, die im Abwicklungsprozess verkauft werden, zu speichern, und eine Kommunikationseinheit (46), die kommunizierend mit der Geldabwicklungsvorrichtung (11) verbunden ist.

8. Geldtransaktionssystem (2) nach Anspruch 7, wobei die Transaktionsinformationen Geldanzahl-Informationen, die nach Nennwert in der Geldabwicklungsvorrichtung (11) gespeichert sind, beinhalten und die Ausgabeeinheit (180) dazu konfiguriert ist, die Transaktionsinformationen, die die Anzahlinformationen beinhalten, als einen Lagerbericht auszugeben.

9. Geldtransaktionssystem (2) nach Anspruch 7, wobei die Geldabwicklungsvorrichtung (11) dazu konfiguriert ist, die Kontotransaktion unter Verwendung von Buchgeld in einem Bankkonto basierend auf einer Anweisung der transaktionsdatenverarbeitenden Vorrichtung (15) auszuführen.

## Revendications

1. Appareil de règlement numéraire (11) comprenant une unité de dépôt (110), une unité de distribution (120), une unité de stockage (150), une unité de transport (130) et une unité de reconnaissance (140), l'appareil de règlement numéraire (11) étant configuré pour réaliser un procédé de dépôt et de distribution numéraire, dans un procédé de règlement dans lequel un prix de marchandise est payé et l'appareil (11) peut distribuer un billet de banque adéquat et un billet de banque inadéquat sans aucune distinction, et dans une transaction de compte sur la base d'un compte bancaire dans lequel l'appareil (11) distribue seulement un billet de banque adéquat et est interdit de distribuer un billet de banque inadéquat, dans lequel
l'unité de dépôt (110) est configurée pour déposer de l'argent pour stocker l'argent dans l'unité de stockage (150) ;
l'unité de distribution (120) est configurée pour distribuer l'argent stocké dans l'unité de stockage (150) ;
l'unité de transport (130) est configurée pour transporter l'argent ayant été mis dans l'unité de dépôt (110) jusqu'à l'unité de stockage (150), ou est configurée pour transporter, à partir de l'unité de stockage (150), l'argent stocké destiné à être distribué à partir de l'unité de distribution (120) ;
l'unité de reconnaissance (140) est configurée pour reconnaître une dénomination, une authenticité, une adéquation, une version, et un nombre de pièces de l'argent transporté par l'unité de transport (130), et
l'unité de stockage (150) est configurée pour stocker, par dénomination, l'argent reconnu par l'unité de reconnaissance (140),
**caractérisé en ce que** l'appareil de règlement numéraire (11) comprend en outre :
une unité de mémoire (170) configurée pour stocker, par dénomination, le nombre de pièces de l'argent stocké par l'unité de stockage (150),
une unité de commande (190) configurée pour commander l'appareil (11), et
une unité de sortie (180) connectée en communication à des appareils sauf à l'appareil (11), dans lequel
l'unité de mémoire (170) stocke des informations de transaction concernant un nombre de billets de banque de l'argent déposé ou distribué dans le procédé de règlement et dans la transaction de compte de manière telle que des billets de banque adéquats et des billets de banque inadéquats soient séparés les uns des autres pour chaque dénomination, moyennant quoi le billet de banque adéquat et le billet de banque inadéquat peuvent être différentiés l'un de l'autre pour chaque dénomination ; et
l'unité de sortie (180) est configurée pour envoyer les informations de transaction aux appareils, dans lequel
lorsque le procédé de règlement et la transaction de compte sont répétés, des informations de journal du procédé de règlement et de la transaction de compte sont stockées dans l'unité de mémoire (170), les informations de journal sont des informations représentant le nombre de billets de banque adéquats pour chaque dénomination et le nombre de billets de banque inadéquats pour chaque dénomination, qui ont été déposés et distribués dans les procédés de règlement et transactions de comptes respectifs,
l'unité de commande (190) est configurée pour tabuler les informations de journal du procédé de règlement et de la transaction de compte pendant une période prédéterminée pour créer des données tabulées en tant qu'informations de transaction,
les données tabulées sont stockées dans l'unité de mémoire (170),
l'unité de commande (190) est configurée pour créer un rapport de transaction sur la base des données tabulées,
l'unité de sortie (180) est configurée pour envoyer le rapport de transaction aux appareils, et
les données tabulées incluent
le nombre de billets de banque de chaque dénomination au moment présent dans l'unité de stockage (150) de manière telle que le nombre de billets de banque adéquats et le nombre de billets de banque inadéquats soient séparés les uns des autres,
le nombre de billets de banque adéquats en excès, par dénomination, destinés à être collectés à partir de l'unité de stockage (150), et
le nombre de billets de banque inadéquats, par dénomination, destinés à être collectés à partir de l'unité de stockage (150),
dans lequel l'unité de stockage (150) a une valeur de référence pour chaque dénomination et le nombre de billets de banque adéquats en excès pour une dénomination correspond au nombre de billets de banque adéquats dépassant la valeur de référence pour cette dénomination.

2. Appareil de règlement numéraire (11) selon la revendication 1, dans lequel l'unité de sortie (180) est configurée pour envoyer les informations de transaction de telle sorte que le procédé de règlement et la transaction de compte soient différentiés l'un de l'autre.

3. Appareil de règlement numéraire (11) selon la revendication 1, dans lequel les informations de transaction incluent des informations concernant une dénomination et l'adéquation de l'argent qui est remis en circulation sur le marché par une opération de distribution.

4. Appareil de règlement numéraire (11) selon la revendication 1, dans lequel le rapport de transaction inclut des données maîtresses ayant des informations concerne un fabricant de l'appareil de règlement numéraire (11), des informations concernant un type de l'appareil de règlement numéraire (11), et des informations concernant un magasin dans lequel l'appareil de règlement numéraire (11) est installé.

5. Appareil de règlement numéraire (11) selon la revendication 1, dans lequel le rapport de transaction inclut des données d'opération ayant des informations concernant une quantité numéraire réglée dans le procédé de règlement par l'appareil de règlement numéraire (11), et des informations concernant une quantité d'argent remise en circulation par l'opération de distribution de la transaction de compte, de manière telle qu'un billet de banque adéquat et un billet de banque inadéquat soient différentiés l'un de l'autre pour chaque dénomination.

6. Appareil de règlement numéraire (11) selon la revendication 1, dans lequel les informations de transaction incluent des informations de nombre numéraire concernant des billets de banque adéquats et des billets de banque inadéquats de l'argent stocké dans l'unité de stockage (150) par dénomination, et l'unité de sortie (180) est configurée pour envoyer les informations de transaction incluant les information de nombre en tant que rapport de magasin.

7. Système de transaction numéraire (2) comprenant : un appareil de règlement numéraire (11) selon la revendication 1 et comprenant en outre un appareil de traitement de données de transaction (15) connecté en communication à l'unité de sortie (180) de l'appareil de règlement numéraire (11) et configuré pour traiter des données de transaction de marchandise ; dans lequel l'appareil de traitement de données de transaction (15) inclut : une unité de mémoire (45) configurée pour stocker des données de transaction de marchandise vendue dans le procédé de règlement ; et une unité de communication (46) connectée en communication à l'appareil de règlement numéraire (11).

8. Système de transaction numéraire (2) selon la revendication 7, dans lequel les informations de transaction incluent des informations de nombre numéraire, par dénomination, stockées dans l'appareil de règlement numéraire (11), et l'unité de sortie (180) est configurée pour envoyer les informations de transaction incluant les informations de nombre en tant que rapport de magasin.

9. Système de transaction numéraire (2) selon la revendication 7, dans lequel l'appareil de règlement numéraire (11) est configuré pour réaliser la transaction de compte en utilisant de l'argent de dépôt dans un compte bancaire, sur la base d'une instruction de l'appareil de traitement de données de transaction (15).
